# EUROPÄISCHE PATENTSCHRIFT

(11) **EP 2 694 332 B1**
(45) Veröffentlichungstag und Bekanntmachung des Hinweises auf die Patenterteilung: **14.06.2017**
(21) Anmeldenummer: 12723119.9
(22) Anmeldetag: 02.04.2012
(51) Int. Cl.: B60R 13/08, B60J 5/04

(54) **FAHRZEUGTÜR MIT EINEM LAUTSPRECHER**
VEHICLE DOOR WITH A LOUDSPEAKER
PORTE DE VÉHICULE AVEC UN HAUT-PARLEUR

(30) Priorität: 01.04.2011 DE 202011000772 U
(43) Veröffentlichungstag der Anmeldung: 12.02.2014
(73) Patentinhaber: Brose Fahrzeugteile GmbH & Co. Kommanditgesellschaft, Bamberg, 96052 Bamberg (DE)
(72) Erfinder: MÜLLER, Joachim, 97440 Werneck (DE)
(74) Vertreter: Maikowski & Ninnemann Patentanwälte Partnerschaft mbB
(86) Internationale Anmeldenummer: PCT/EP2012/055977
(87) Internationale Veröffentlichungsnummer: WO 2012/131094

(56) Entgegenhaltungen:
- FR-A1- 2 905 323
- US-A1- 2006 049 664

## Beschreibung

Die Erfindung betrifft eine Fahrzeugtür nach dem Oberbegriff des Anspruchs 1. Eine solche Tür ist aus US 2006/0049664 A bekannt. Eine derartige Fahrzeugtür weist ein Türinnenblech, ein Türaußenblech mit einer dem Türinnenblech zugewandten Innenfläche und einen an dem Türinnenblech angeordneten, zum Türaußenblech beabstandeten Lautsprecher zum Erzeugen von akustischen Schallwellen auf.

Bei einer beispielsweise aus der DE 196 22 310 A1 bekannten Fahrzeugtür dieser Art ist ein Lautsprecher an einem Aggregateträger eines Türmoduls angeordnet und über den Aggregateträger des Türmoduls an einem Türinnenblech befestigt. Der als Konuslautsprecher ausgebildete Lautsprecher ragt in einen zwischen dem Türinnenblech und dem Türaußenblech gebildeten Nassraum der Fahrzeugtür hinein und strahlt im Betrieb akustische Schallwellen sowohl nach vorne in Richtung eines Fahrzeuginnenraums als auch nach hinten in Richtung des Türaußenblechs ab.

In heutzutage bekannten Fahrzeugtüren werden häufig Konuslautsprecher für die Musikübertragung in einem Frequenzbereich zwischen 20 Hz und 10 kHz eingesetzt. Solche Lautsprecher sind beispielsweise an einem Türmodul, an einem Türinnenblech oder an einer Türinnenverkleidung montiert. Eine Fahrzeugtür kann einen einzigen Lautsprecher oder auch mehrere Lautsprecher aufweisen.

Im Betrieb eines Konuslautsprechers wird eine Membran in Schwingungen versetzt, um Luftschallwellen zu erzeugen. Diese Schallwellen breiten sich als Luftschall aus, wobei die Schallwellen zum einen in den Fahrzeuginnenraum und zum anderen in den Türinnenbereich abgestrahlt werden. Ebenso kann über die Lautsprecheranbindung auch vom Lautsprecher erzeugter Körperschall in die Umgebungsstruktur, beispielsweise der Fahrzeugtür eingekoppelt werden. Dies kann zu einer Anregung der Struktur der Fahrzeugtür führen, welche dann selbst zu einer weiteren Lautsprecheranregung führen kann. Eine weitere Anregung der Umgebungsstruktur erfolgt über die Kompressionsänderung des sich in der Tür befindlichen Luftvolumens durch den Lautsprecher, welches dann wieder die Umgebungsstruktur (Fahrzeugtür, z.B. Türinnenblech, Türaußenblech) zu Schwingungen anregen kann und somit wiederum zu einer Luftschallabstrahlung der Struktur führt. Wenn diese Strukturanregung eine Phasenverschiebung zwischen 0°und 180° zur Lautsprecherauslenkung aufweist, kann dies zu unerwünschten Verstärkungen oder Auslöschungen des Schallereignisses beitragen und ein negatives Verfärben, Dröhnen, Nachhallen sowie eine Klirrfaktorerhöhung (Verzerren) des Lautsprecherklanges bewirken. Ebenso kann es zu einem Verfärben, einem Verschmieren oder einem Dröhnen des Lautsprecherklanges durch Ausbildung von stehenden Wellen in resonanten Strukturen oder durch Anregung von Körperschall und damit einhergehender Erzeugung von sekundärem Luftschall aufgrund von Schwingungen und Vibrationen von Bauteilen kommen.

Um solche nachteiligen Effekte auf die Akustik zu vermeiden, sind aus dem Stand der Technik der Einsatz einer Dämmfolie oder eines Dämmvlieses oder einer Schwerfolie in oder an Türstrukturen bekannt. Zudem kann für einen Lautsprecher ein geschlossenes Luftvolumen vorgesehen werden. Diese Maßnahmen haben jedoch den Nachteil, dass sie gegebenenfalls hohe Kosten und ein erhöhtes Gewicht sowie einen höheren Bauraum in oder an der Fahrzeugtür bewirken.

Die Abstrahlung von Schallwellen in Richtung des Türaußenblechs kann zudem zu einer Körperschallanregung des Türaußenblechs führen. Eine solche Körperschallanregung findet insbesondere dann statt, wenn abgestrahlte Schallwellen senkrecht auf das Türaußenblech auftreffen und dadurch vorteilhaft in die Struktur des Türaußenblechs einkoppeln können. Ebenso wird über eine direkte Beschallung des Türaußenbleches (Direktschall trifft über freien Luftschallweg von der Lautsprecherrückseite auf die Nassraumseite des Türaußenbleches und Türnassraum) die Durchschallungsdämmung nur durch das Material, die Struktureigenschaften des Türaußenbleches sowie die akustische Dichtheit des Türnassraumes hin zur Fahrzeugaußenseite bestimmt. Diese Schallpfade sind bidirektional, so dass Schall - z.B. Sprache, die vom Lautsprecher abgestrahlt wird - außerhalb des Fahrzeuges wahrgenommen werden kann. Darüber hinaus können Geräusche von außerhalb des Fahrzeuges (Reifengeräusch, Windgeräusche, Fahrgeräusche....) über diese Schallpfade in den Fahrgastraum gelangen und den Innenraumgeräuschpegel verschlechtern.

Gerade durch die großflächige leichte Strukturbeschaffenheit der Türaußenbleche erzeugt hier die Anregung durch Luft und Körperschall eine Schwachstelle. Dies kann z.B. dazu führen, dass Schallwellen auch nach außen, also in den Außenraum außerhalb des Fahrzeugs, abgestrahlt werden, so dass vom Lautsprecher erzeugte Schallwellen außerhalb des Fahrzeugs wahrnehmbar sind, was beispielsweise dann, wenn der Lautsprecher im Rahmen einer Telefon-Freisprechanlage eingesetzt wird, dazu führen kann, dass Telefongespräche außerhalb des Fahrzeugs mitgehört werden können.

Die US 2006/0049664 A1 offenbart eine Fahrzeugtür mit einem Türinnenblech und einem Türaußenblech sowie einem an dem Türinnenblech festgelegten Türmodul, das einen Lautsprecher trägt. An dem Lautsprecher ist rückwärtig ein Schallschirm angeordnet, der hin zum Türaußenblech abgestrahlten Schall abschirmen soll.

Aufgabe der vorliegenden Erfindung ist es, eine Fahrzeugtür der eingangs genannten Art zur Verfügung zu stellen, die mit einfachen Mitteln eine Verbesserung der Systemakustik unter Reduzierung der Anregung von Körperschall insbesondere an dem Türaußenblech ermöglicht.

Diese Aufgabe wird durch einen Gegenstand mit den Merkmalen des Anspruchs 1 gelöst.

Demnach ist bei einer Fahrzeugtür ein Schallleitelement vorgesehen, das ausgebildet ist, vom Lautsprecher in Richtung des Türaußenblechs abgestrahlte Schallwellen umzulenken und in einen Nassraum der Fahrzeugtür, der zwischen dem Türinnenblech und dem Türaußenblech gebildet ist, und/oder in einen Trockenraum der Fahrzeugtür, der an einer dem Türaußenblech abgewandten Seite des Türinnenblechs gebildet ist, zu leiten.

Beispielsweise kann das Schallleitelement durch einen zwischen dem Lautsprecher und dem Türaußenblech angeordneter Diffusor ausgebildet sein, der ausgebildet ist, vom Lautsprecher in Richtung des Türaußenblechs abgestrahlte Schallwellen derart zu reflektieren, dass sie nicht in direkter Abstrahlung senkrecht auf die Innenfläche des Türaußenblechs treffen.

Das Schallleitelementkann insbesondere eine Reflektionsfläche aufweisen, die unter einem schrägen Winkel zu einer Haupterstreckungsebene gerichtet ist, entlang derer sich das Türaußenblech im Wesentlichen erstreckt.

Die vorliegende Erfindung geht von dem Gedanken aus, den rückwärtig von einem Lautsprecher abgestrahlten Schall von dem Türaußenblech zu entkoppeln. Die von dem Lautsprecher in Richtung des Türaußenblechs abgestrahlten Schallwellen sollen dabei in direkter Abstrahlung nicht senkrecht auf das Türaußenblech auftreffen, um eine Anregung des Türaußenblechs zu Körperschall nach Möglichkeit zu vermeiden oder zumindest zu reduzieren. Gleichzeitig sollen die Schallwellen nicht direkt zu dem Lautsprecher zurückreflektiert werden, um zu vermeiden, dass die zurückreflektierten Schallwellen den Lautsprecher durchschallen können.

Hierzu ist eine Reflektionsfläche vorgesehen, die schräg zu der Haupterstreckungsebene des Türaußenblechs gestellt ist. Der schräge Winkel kann beispielsweise zwischen 20° und 70 °, vorzugsweise zwischen 30° und 60 ° liegen. Ist der Lautsprecher an dem Türinnenblech in einer in etwa parallel zur Haupterstreckungsebene des Türaußenblechs liegenden Ebene angeordnet, so wird der Lautsprecher einen nicht unerheblichen Anteil der rückwärtig abgestrahlten Schallwellen in senkrechter Richtung hin zum Türaußenblech strahlen. Durch die schräge Anordnung der Reflektionsfläche in diesem Strahlengang der rückwärtig abgestrahlten Schallwellen wird bewirkt, dass diese rückwärtig abgestrahlten Schallwellen nicht senkrecht auf die dem Lautsprecher zugewandte Innenfläche des Türaußenblechs treffen können und gleichzeitig eine Reflektion zurück zum Lautsprecher vermieden wird. Vielmehr werden aufgrund der schrägen Anordnung der Reflektionsfläche die Schallwellen so abgelenkt, dass sie beispielsweise bevorzugt parallel zur Haupterstreckungsebene des Türaußenblechs reflektiert werden oder unter flachem Winkel auf die Innenfläche des Türaußenblechs oder das Türinnenblech oder ein mit dem Türinnenblech verbundenes Türmodul treffen, so dass nur eine geringe Anregung von Körperschall am Türaußenblech erfolgen kann.

Darunter, dass die Schallwellen in direkter Abstrahlung nicht senkrecht auf die Innenfläche des Türaußenblechs treffen sollen, soll im Rahmen des vorliegenden Texts verstanden werden, dass vom Lautsprecher in Richtung des Türaußenblechs abgestrahlte Schallwellen sich nicht auf direktem Wege in Richtung des Türaußenblechs ausbreiten und dabei auf direktem Ausbreitungsweg senkrecht auf das Türaußenblech treffen können. Das Schallleitelement unterbricht sozusagen den Ausbreitungsweg von solchen vom Lautsprecher abgestrahlten Schallwellen, die ansonsten - ohne Schallleitelement - senkrecht auf die Innenfläche des Türaußenblechs treffen würden. Eine direkte Ausbreitung von Schallwellen und ein senkrechtes Auftreffen solcher Schallwellen auf die Innenfläche des Türaußenblechs ist somit unterbunden.

Es kann dabei durchaus möglich sein, dass sich andere Schallwellen - also Schallwellen, die bei direkter Ausbreitung in Richtung ihres Strahlengangs nicht senkrecht auf die Innenfläche des Türaußenblechs auftreffen - am Schallleitelement vorbei bewegen und in direkter Abstrahlung auf die Innenfläche des Türaußenblechs auftreffen können.

Weiterhin kann möglich sein, dass Schallwellen nach Mehrfachreflektion senkrecht auf die Innenfläche des Türaußenblechs auftreffen.

Unter "senkrecht" kann hier auch ein Winkelbereich von 90°+/- α, beispielsweise 90°+/- 15°, zur (Haupt-)Erstreckungsebene des Türaußenblechs verstanden werden, so dass das Schallleitelement auch Schallwellen ablenkt, die in direkter Abstrahlung vom Lautsprecher nicht exakt senkrecht auf die Innenfläche des Lautsprechers auftreffen würden.

Das Schallleitelement kann beispielsweise einen Körper in Form eines Rhombus oder eines Kegels aufweisen. Der Körper kann in diesem Fall eine Spitze aufweisen, die dem Lautsprecher zugekehrt ist und insbesondere konzentrisch zu einer durch den Schwerpunkt des Lautsprechers weisenden, entlang einer Hauptabstrahlrichtung des Lautsprechers verlaufenden Mittenachse des Lautsprechers angeordnet ist. Diese Mittenachse kann beispielsweise einer Rotationssymmetrieachse des Lautsprechers entsprechen, insbesondere dann, wenn der Lautsprecher als Konuslautsprecher mit einer konusförmigen Membran ausgebildet ist.

Die Ausgestaltung des Schallleitelements ist nicht auf die Formgebung eines Rhombus oder eines Kegels beschränkt. Grundsätzlich kann das Schallleitelement jede beliebige Form aufweisen, solange das Schallleitelement nur ausgestaltet ist, vom Lautsprecher in Richtung des Türaußenblechs abgestrahlte Schallwellen derart zu reflektieren, dass sie nicht senkrecht auf die Innenfläche des Türaußenblechs treffen. Das Schallleitelement kann allgemein durch eine oder mehrere schräg gestellte Reflektionsflächen gebildet sein, die unter einem schrägen Winkel zu der Haupterstreckungsebene des Türaußenblechs verlaufen.

Ein Schallleitelement dieser Art kann beispielsweise über Streben mit dem Türinnenblech oder einem an dem Türinnenblech angeordneten Türmodul befestigt sein. Schallwellen können hierbei zwischen den Streben hindurch von dem Schallleitelement weg laufen, so dass von dem Schallleitelement reflektierte Schallwellen aus dem Bereich des Schallleitelements abgestrahlt werden können. Zusätzlich können an den Streben auch Lamellen zur weiteren Reflektion und Umleitung von an dem Schallleitelement reflektierten Schallwellen angeordnet sein, so dass die Schallwellen in gewünschter Weise von dem Schallleitelement weg geleitet werden können.

In alternativer Ausgestaltung kann das Schallleitelement selbst auch durch eine Anzahl von Lamellen gebildet sein, die unter einem schrägen Winkel zu der Haupterstreckungsebene, entlang derer sich das Türaußenblech im Wesentlichen erstreckt, gerichtet sind. Die Lamellen reflektieren hierbei die vom Lautsprecher in Richtung des Türaußenblechs abgestrahlten Schallwellen derart, dass sie nach Möglichkeit nicht senkrecht auf das Türaußenblech treffen und auch nicht direkt zum Lautsprecher zurückgeschallt werden.

Eine Anzahl von Lamellen kann hierbei benachbart zueinander und, gesehen vom Lautsprecher in Richtung des Türaußenblechs, überlappend zueinander angeordnet sein, so dass der Strahlengang zwischen dem Lautsprecher und dem Türaußenblech durch die Lamellen derart verschlossen ist, dass vom Lautsprecher in Richtung des Türaußenblechs abgestrahlte Schallwellen nicht direkt auf das Türaußenblech treffen können.

In bevorzugter Ausgestaltung können die Lamellen an einer dem Lautsprecher zugewandten Innenfläche reflektierend zur Reflektion von vom Lautsprecher in Richtung des Türaußenblechs abgestrahlten Schallwellen ausgebildet sein. An einer dem Lautsprecher abgewandten Außenfläche hingegen können die Lamellen eine absorbierende Schicht tragen, die zur Absorption von Schallwellen ausgestaltet ist. Auf diese Weise kann erreicht werden, dass die benachbart zueinander angeordneten und schräg gestellten Lamellen jeweils an der dem Lautsprecher zugewandten Innenfläche die vom Lautsprecher in Richtung des Türaußenblechs abgestrahlten Schallwellen reflektieren, und zwar jeweils hin zu der Außenfläche einer benachbarten Lamelle, so dass an dieser Außenfläche über die daran angeordnete absorbierende Schicht die Schallwellen vollständig oder zumindest teilweise absorbiert werden.

Die absorbierende Schicht kann hierbei ausgestaltet sein, die auf sie treffenden Schallwellen in einem vorbestimmten Frequenzbereich zu absorbieren. So kann beispielsweise vorgesehen sein, dass an der absorbierenden Schicht höherfrequente Anteile, beispielsweise Anteile in einem Frequenzbereich zwischen 1 kHz und 10 kHz, absorbiert werden. Niederfrequente Anteile hingegen können an der absorbierenden Schicht reflektiert werden, so dass die niederfrequenten Anteile über das Schallleitelement mit seinen Lamellen übertragen werden können. Das Schallleitelement weist somit eine Art Filterfunktion auf, mittels derer gezielt höherfrequente Anteile der in Richtung des Türaußenblechs abgestrahlten Schallwellen unterdrückt werden können.

Grundsätzlich kann allgemein eine Reflektionsfläche des Schallleitelements so ausgestaltet sein, dass Schallwellen in akustisch differenzierender Weise abhängig von ihrer Frequenz unterschiedlich reflektiert werden. So kann eine Reflektionsfläche des Schallleitelements allgemein so ausgestaltet sein, dass bestimmte Frequenzanteile reflektiert, andere Frequenzanteile aber transmittiert oder absorbiert werden. Die Reflektionsfläche kann hierzu eine geeignete (frequenzabhängig reflektierende oder absorbierende) Beschichtung aufweisen oder auch mehrschichtig aufgebaut sein. Durch Bereitstellung einer geeignet ausgebildeten Reflektionsfläche können somit die in Richtung des Türaußenblechs abgestrahlten Schallwellen nicht nur in ihrer Richtung verändert, sondern auch in ihrer Frequenzverteilung gezielt beeinflusst werden.

Der Lautsprecher ist vorteilhafterweise an einem mit dem Türinnenblech verbundenen Türmodul der Fahrzeugtür angeordnet. Das Schallleitelement kann in diesem Fall an dem Türmodul befestigt, beispielsweise integral mit einem Aggregateträger des Türmoduls ausgebildet und dazu einstückig beispielsweise mittels Kunststoffspritzgießen mit dem aus Kunststoff hergestellten Aggregateträger geformt sein. Ein Schallleitelement in Form eines Rhombus oder eines Kegels oder eines Käfigs mit Lamellen kann hierbei über Streben mit dem Türmodul verbunden sein.

Ebenso kann das Schallleitelement aber auch an dem Türaußenblech und/oder dem Türinnenblech befestigt sein.

Denkbar ist zudem auch, das Schallleitelement einerseits beispielsweise mit dem Türmodul oder dem Türinnenblech und andererseits mit dem Türaußenblech zu verbinden, um auf diese Weise eine zusätzliche Abstützung zwischen dem Türmodul bzw. dem Türinnenblech und dem Türaußenblech zu schaffen. Die Verbindung kann in diesem Fall beispielsweise über ein akustisch dämpfendes Material hergestellt werden, so dass eine Übertragung von Schallwellen über die Abstützung nicht möglich ist.

Im Sinne einer Integration von mehreren Funktionen in ein einziges Bauteil kann das Schallleitelement ein zur Aufnahme von Crashkräften ausgebildetes Crashpad aufweisen oder mit einem solchen Crashpad verbunden sein. Das Crashpad kann dabei innerhalb des Körpers des Schallleitelements angeordnet sein oder sich durch das Schallleitelement abschnittsweise hindurcherstrecken. Das Crashpad ist dabei gezielt optimiert, um in einem Crashfall wirkende Crashkräfte absorbieren und ableiten zu können und im Sinne einer Knautschzone einen Schutz für im Fahrzeuginnenraum befindliche Fahrzeuginsassen bereitzustellen.

Zur weiteren Verbesserung der Dämpfungseigenschaften des Schallleitelements kann das Schallleitelement auch mit einem akustisch dämpfenden Zusatzmaterial, beispielsweise einem Dämpfungsmaterial in Form einer Matte, eines Vlieses oder eines anderen Füllmaterials ausgestattet oder gefüllt sein. Über ein solches Zusatzmaterial kann zudem auch eine Abstützung des Schallleitelements beispielsweise gegenüber dem Türaußenblech bereitgestellt werden, wobei aufgrund dämpfender Eigenschaften des Zusatzmaterials eine Übertragung von Schwingungen vom Schallleitelement hin zum Türaußenblech unterbunden oder zumindest gedämpft ist.

Das Schallleitelement kann grundsätzlich auch anders als ein Diffusor der vorangehend beschriebenen Art ausgebildet sein. So kann das Schallleitelement beispielsweise einen Führungskanal zum Leiten von Schallwellen weg von dem Lautsprecher ausbilden, wobei sich dieser Führungskanal in den Nassraum und/oder in den Trockenraum der Fahrzeugtür öffnen kann, um Schallwellen in den Nassraum und/oder den Trockenraum abzustrahlen. Das als Führungskanal ausgebildete Schallleitelement lenkt hierbei die Schallwellen, die rückwärtig vom Lautsprecher in Richtung des Türaußenblech abgestrahlt werden, um und leitet diese in gezielter, gewünschter Weise vom Lautsprecher weg, um die Schallwellen in den Nassraum und/oder den Trockenraum der Fahrzeugtür einzuleiten.

Der Führungskanal weist eine Öffnung in den Nassraum und/oder den Trockenraum der Fahrzeugtür auf. Diese Öffnung kann örtlich begrenzt sein, um eine örtlich begrenzte Schalleinleitung in den Nassraum und/oder den Trockenraum bereitzustellen. Denkbar ist aber auch, dass der Führungskanal quer zu der Mittenachse des Lautsprechers geöffnet ist, so dass eine Abstrahlung von Schallwellen aus dem Bereich des Schallleitelements quer zur Mittenachse des Lautsprechers möglich ist.

Im Bereich der Öffnung des Führungskanals können Lamellen zum Leiten von Schallwellen angeordnet sein. An diesen Lamellen kann ein akustisch dämpfender Füllstoff vorgesehen sein, der nach Art einer Beschichtung zum frequenzselektiven Absorbieren von Schallwellen auf die Lamellen aufgebracht sein kann oder der einen Zwischenraum zwischen jeweils zwei Lamellen vollständig ausfüllt, so dass aus dem Führungskanal austretende Schallwellen den Füllstoff durchdringen.

Zusätzlich kann ein Füllstoff zumindest abschnittsweise in den Führungskanal eingebracht sein, so dass der Führungskanal zumindest abschnittsweise mit einem Füllstoff gefüllt ist. Der Füllstoff kann so gestaltet sein, dass er frequenzselektiv Schallwellen absorbiert (dämpft) oder passieren lässt. Beispielsweise können hochfrequente Anteile der Schallwelle in gezielter, gewünschter Weise gedämpft werden, während niederfrequente Anteile ohne wesentliche Abschwächung durch den Führungskanal gelangen können.

Möglich ist auch, zumindest eine Wandung des Führungskanal zumindest abschnittsweise mit einem absorbierenden Material zu beschichten, wobei eine so aufgebrachte absorbierende Schicht ebenfalls zur frequenzselektiven Dämpfung von Schallwellen ausgebildet sein kann, um beispielsweise hochfrequente Anteile der Schallwellen zu dämpfen und niederfrequente Anteile im Wesentlichen unverändert passieren zu lassen.

Der Führungskanal kann sich quer zur Mittenachse des Lautsprechers zum Abstrahlen von Schallwellen öffnen, so dass Schallwellen in radialer Richtung zur Mittenachse abgestrahlt werden können. In diesem Fall ist das Schallleitelement im Wesentlichen zwischen dem Lautsprecher und dem Türaußenblech angeordnet, um eine direkte Schallausbreitung von Schallwellen vom Lautsprecher hin zum Türaußenblech zu verhindern.

Denkbar ist aber auch, den Führungskanal mäanderförmig oder schneckenförmig auszugestalten, wobei der Führungskanal beispielsweise in der Ebene des Türinnenblechs oder eines an dem Türinnenblech angeordneten Türmoduls verlaufen und einstückig oder als separates Bauteil an dem Türinnenblech oder an einer Trägerplatte des Türmoduls angebracht sein kann.

Ein solcher Führungskanal kann - betrachtet in einer Ebene quer zu einer Hauptausbreitungsrichtung von Schallwellen in dem Führungskanal - beispielsweise einen kreisrunden, einen ovalen oder einen rechteckigen Öffnungsquerschnitt aufweisen. Der Öffnungsquerschnitt kann hierbei entlang der Hauptausbreitungsrichtung in seiner Größe und Form konstant sein. Denkbar ist aber auch, dass der Öffnungsquerschnitt in Größe und/oder Form entlang der Hauptausbreitungsrichtung der Schallwellen variiert. Beispielsweise kann sich der Öffnungsquerschnitt entlang des Führungskanals, betrachtet vom Lautsprecher hin zur Öffnung des Führungskanals, weiten, so dass der Öffnungsquerschnitt nach außen hin größer wird. Durch gezielte Anpassung des Öffnungsquerschnitts können beispielsweise in gewünschter Weise Frequenzen selektiv gedämpft werden, Resonanzen des Führungskanals eingestellt und vorgegeben werden und so eine gewünschte Schallübertragung mittels des Führungskanals erzielt werden.

Auch in einem solchen Führungskanal können Füllstoffe im Bereich der Öffnung (gegebenenfalls an Lamellen) oder auch abschnittsweise innerhalb des Führungskanals vorgesehen sein, um in frequenzselektiver Weise eine Ausbreitung und Abstrahlung von Schallwellen zu beeinflussen.

Durch einen nach Art einer "Transmission Line" an dem Türinnenblech oder einem Türmodul angeordneten Führungskanal kann die Übertragung von rückwärtig vom Lautsprecher abgestrahlten Schallwellen in gewünschter Weise beeinflusst werden. Beispielsweise kann ein solcher Führungskanal Resonanzen im niederfrequenten Bereich aufweisen, so dass mittels des Führungskanals gezielt niederfrequente Anteile von Schallwellen verstärkt werden können, um so eine akustische Verstärkung im Bassbereich der abgestrahlten Schallwellen zu erhalten. Der Führungskanal kann integral beispielsweise in eine Trägerplatte eines Türmoduls eingeformt sein, wobei auch denkbar ist, den Führungskanal als zusätzliches Bauteil an einer Trägerplatte anzuordnen. Der Führungskanal kann beispielsweise eine gesamte Länge von einem Viertel der mittleren Wellenlänge eines zu verstärkenden Frequenzbereichs aufweisen.

Das Schallleitelement ist in ein Trägerelement eines Türmoduls derart integriert, dass es mit dem Trägerelement eine einstückige Einheit bildet. Das Trägerelement kann beispielsweise durch einen Aggregateträger eines Türmoduls gebildet sein, an dem auch andere Funktionskomponenten, z.B. ein Fensterheber, der Lautsprecher ein Türschloss oder dergleichen, festgelegt sind.

Der der Erfindung zugrundeliegende Gedanke soll nachfolgend anhand der in den Figuren dargestellten Ausführungsbeispiele näher erläutert werden. Es zeigen:
- Fig. 1: eine schematische Ansicht einer Fahrzeugtür;
- Fig. 2: eine Schnittansicht durch die Fahrzeugtür entlang der Linie I - I gemäß Fig. 1;
- Fig. 3: eine schematische Ansicht einer ersten Ausführungsform eines zwischen einem Lautsprecher eines Türmoduls und einem Türaußenblech der Fahrzeugtür angeordneten Schallleitelements in Form eines Diffusors zum Reflektieren von Schallwellen, die von dem Lautsprecher in Richtung des Türaußenblechs abgestrahlt werden;
- Fig. 4A: eine Draufsicht auf einen Diffusor in Form eines Rhombus;
- Fig. 4B: eine Draufsicht auf einen Diffusor in Form eines Kegels;
- Fig. 5: eine schematische Ansicht einer weiteren Ausführungsform eines Diffusors zwischen einem Lautsprecher und einem Türaußenblech;
- Fig. 6: eine schematische Ansicht eines weiteren Ausführungsbeispiels eines Diffusors;
- Fig. 7: eine schematische Ansicht eines weiteren Ausführungsbeispiels eines Diffusors;
- Fig. 8: eine schematische Ansicht eines weiteren Ausführungsbeispiels eines Diffusors;
- Fig. 9: eine schematische Ansicht eines weiteren Ausführungsbeispiels eines Diffusors umfassend Lamellen;
- Fig. 10A: eine vergrößerte Ansicht der Lamellen des Diffusors des Ausführungsbeispiels gemäß Fig. 9;
- Fig. 10B: eine Ansicht der Lamellen, gesehen vom Lautsprecher her;
- Fig. 11: eine schematische Schnittansicht entlang einer durch eine Fahrzeugquerrichtung und eine Fahrzeuglängsrichtung aufgespannten Schnittebene, darstellend die Anordnung eines Diffusors an einem Türmodul bei gleichzeitiger Ermöglichung des Verstellens einer Fensterscheibe;
- Fig. 12: eine schematische Ansicht eines gegenüber dem Ausführungsbeispiel gemäß Fig. 8 geringfügig modifizierten Ausführungsbeispiels;
- Fig. 13A: eine schematische Ansicht eines gegenüber dem Ausführungsbeispiel gemäß Fig. 11 modifizierten Ausführungsbeispiels;
- Fig. 13B: eine schematische Ansicht eines Türaußenblechs mit unterschiedlichen Crashpads, von denen eines mit einem Diffusor integriert ist;
- Fig. 14A: eine schematische Ansicht eines weiteren Ausführungsbeispiels, das gegenüber dem Ausführungsbeispiel gemäß Fig. 13A, 13B modifiziert ist;
- Fig. 14B: eine andere Ansicht des Ausführungsbeispiels gemäß Fig. 14A;
- Fig. 15: eine schematische Ansicht eines Schallleitelements in Form eines Führungskanals;
- Fig. 16A: eine schematische Ansicht eines Schallleitelements in Form eines Führungskanals;
- Fig. 16B: eine Ansicht der Anordnung gemäß Fig. 16A, betrachtet in die Blickrichtung B gemäß Fig. 16A;
- Fig. 17A: eine schematische Ansicht eines weiteren Ausführungsbeispiels eines Schallleitelements, das einen Führungskanal ausbildet;
- Fig. 17B: eine Ansicht der Anordnung gemäß Fig. 17A, betrachtet in die Blickrichtung B gemäß Fig. 17A;
- Fig. 18: eine schematische Ansicht eines Ausführungsbeispiels eines einen Führungskanal ausbildenden Schallleitelements, bei dem Wandungen abschnittsweise mit einer absorbierenden Schicht beschichtet sind;
- Fig. 19: eine schematische Ansicht eines Ausführungsbeispiels eines einen Führungskanal ausbildenden Schallleitelements, bei dem der Führungskanal zumindest abschnittsweise mit einem Füllstoff gefüllt ist;
- Fig. 20: eine Ansicht eines Ausführungsbeispiels eines Schallleitelements, welches einen Führungskanal ausbildet, bei dem im Bereich einer Öffnung Lamellen angeordnet sind;
- Fig. 21: eine Ansicht eines Ausführungsbeispiels eines einen Führungskanal ausbildenden Schallleitelements, bei dem im Bereich einer Öffnung Lamellen mit daran angebrachtem Füllstoff angeordnet sind;
- Fig. 22: eine schematische Ansicht eines einen Führungskanal ausbildenden Schallleitelements;
- Fig. 23A: eine schematische Ansicht eines einen Führungskanal ausbildenden Schallleitelements, betrachtet an einer Querschnittsebene senkrecht zu einer Erstreckungsebene eines Türmoduls;
- Fig. 23B: eine schematische Ansicht der Anordnung gemäß Fig. 23A, betrachtet in der Erstreckungsebene des Türmoduls; und
- Fig. 24: eine schematische Ansicht eines anderen Ausführungsbeispiels eines einen Führungskanal ausbildenden Schallleitelements.

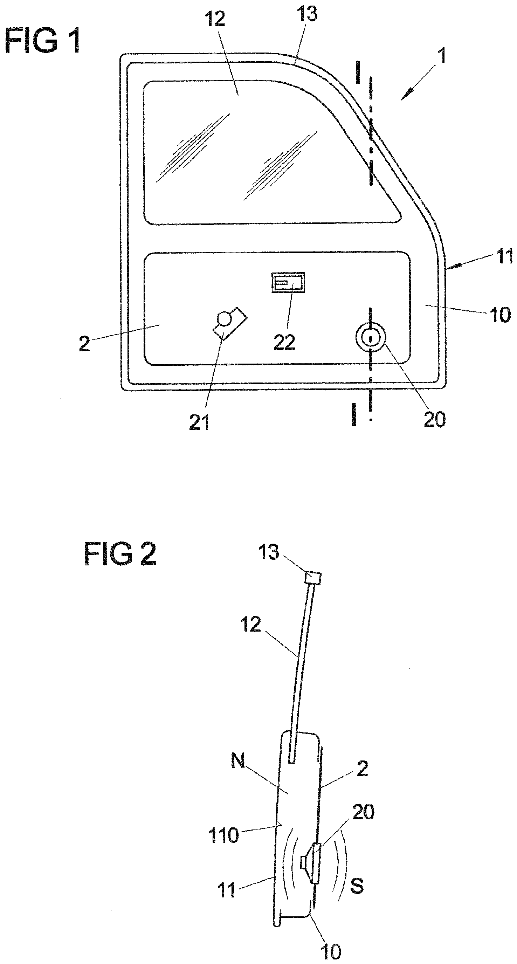

Fig. 1 zeigt in einer schematischen Ansicht eine Fahrzeugtür 1, die in an sich bekannter Weise ein Türinnenblech 10, ein Türaußenblech 11 und eine von einem Türrahmen 13 begrenzte, von einer Fensterscheibe 12 verschlossene Fensteröffnung aufweist. An dem Türinnenblech 10 ist ein Türmodul 2 angeordnet, das in ebenfalls an sich bekannter Weise unterschiedliche Funktionskomponenten der Fahrzeugtür 1 aufweist und zu einer modularen, vormontierten Funktionseinheit zusammenfasst. Das Türmodul 2 kann in diesem Sinne beispielsweise einen Lautsprecher 20, eine Antriebseinheit 21 für einen Fensterheber und einen Türinnengriff 22 umfassen und eine Öffnung in dem Türinnenblech 10 feuchtigkeitsdicht verschließen, wie dies beispielsweise aus der DE 196 22 310 A1 bekannt ist.

Wie in Fig. 2 schematisch veranschaulicht, strahlt der Lautsprecher 20 Schallwellen S ab, um einen im Fahrzeuginnenraum wahrnehmbaren akustischen Klang zu erzeugen. Der Lautsprecher 20 soll dabei die Schallwellen S nach Möglichkeit vorzugsweise in den Fahrzeuginnenraum, also nach vorne von dem Türaußenblech 11 weg abstrahlen.

Es lässt sich jedoch nicht ohne weiteres verhindern, dass der Lautsprecher 20 auch Schallwellen S in Richtung des Türaußenblechs 11 in den zwischen dem Türinnenblech 10, dem Türmodul 2 und dem Türaußenblech 11 gebildeten Nassraum N der Fahrzeugtür 1 hinein abstrahlt. Treffen die vom Lautsprecher 20 rückwärtig abgestrahlten Schallwellen S auf das Türaußenblech 11, so können die Schallwellen S in das Türaußenblech 11 einkoppeln und das Türaußenblech 11 zu Körperschall anregen. Zudem können sich durch an dem Türaußenblech 11 reflektierte Schallwellen stehende Wellen innerhalb des Nassraum N ausbilden.

Darüber hinaus kann es durch Schwingungen des Lautsprechers 20 auch zu einer Körperschallanregung des den Lautsprecher 20 tragenden Türmoduls 2 oder des mit dem Türmodul 2 verbundenen Türinnenblechs 10 kommen.

Insgesamt kann eine Anregung von Bauteilen der Fahrzeugtür 1 eine Körperschallanregung im Zusammenspiel mit einem Ausbilden von stehenden Wellen beispielsweise in dem zwischen dem Türaußenblech 11 und dem Türmodul 2 gebildeten Nassraum N bewirken, was zu einer Verfärbung, einem Verschmieren und Dröhnen des Lautsprecherklanges und damit einer nachteiligen Beeinflussung der Systemakustik führen kann.

Um diesem entgegenzuwirken, ist im Sinne der vorliegenden Erfindung zwischen dem Lautsprecher 20 des Türmoduls 2 und dem Türaußenblech 11 ein Schallleitelement angeordnet, das ausgestaltet ist, von dem Lautsprecher 20 in Richtung des Türaußenblechs 11 abgestrahlte Schallwellen S umzuleiten und abzulenken.

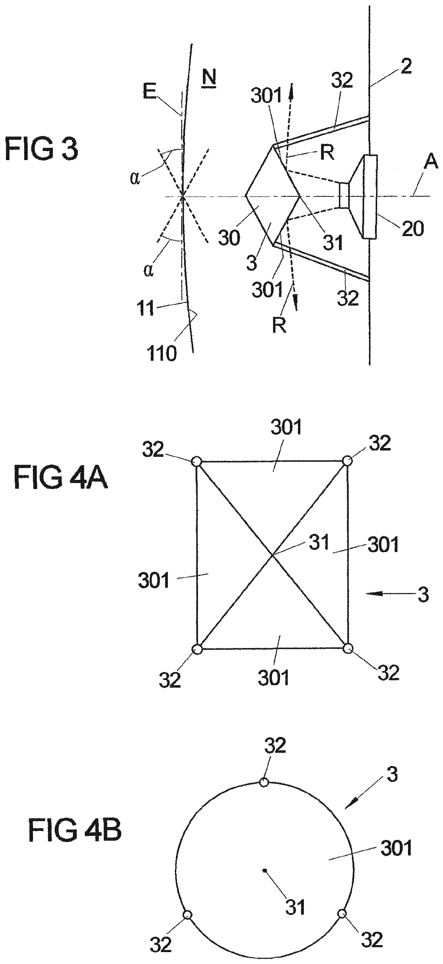

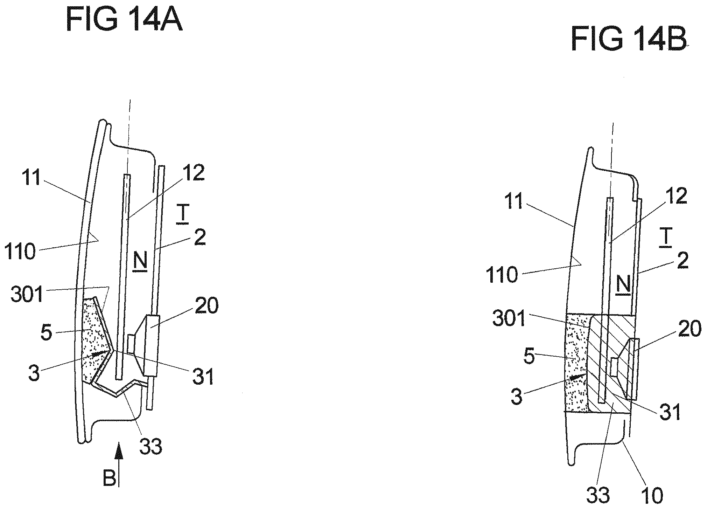

Anhand von Fig. 3 bis 14A, 14B sollen nachfolgend konkrete Ausführungsbeispiele eines Schallleitelements in Form eines Diffusors 3 beschrieben werden, wobei die Ausführungsbeispiele nicht beschränkend für die Erfindung sein sollen. In den Abbildungen der einzelnen Ausführungsbeispiele werden gleiche Bezugszeichen für Bauteile gleicher Funktion verwendet, soweit dies zweckdienlich ist.

Bei einem ersten, in Fig. 3 schematisch dargestellten Ausführungsbeispiel ist ein Diffusor 3 zwischen dem Lautsprecher 20 und dem Türinnenblech 11 im Nassraum N der Fahrzeugtür 1 angeordnet. Der Diffusor 3 weist einen Körper 30 auf, der beispielsweise die Gestalt eines Rhombus (vergleiche Fig. 4A) oder eines Kegels (vergleiche Fig. 4B) aufweisen kann. Der Diffusor 3 weist eine oder mehrere Reflektionsflächen 301 auf, die derart ausgerichtet sind, dass sie einen schrägen Winkel a zu einer Haupterstreckungsebene E bilden, entlang derer sich das Türaußenblech 11 im Wesentlichen erstreckt. (Es sei angemerkt, dass das Türaußenblech 11 leicht gekrümmt sein kann. Die Haupterstreckungsebene E kann in diesem Fall als Tangentialebene an das Türaußenblech 11 am Aufpunkt einer Mittenachse A des Lautsprechers 20 angesehen werden.)

Die Reflektionsflächen 301 bewirken, dass Schallwellen, die vom Lautsprecher 20 rückwärtig in Richtung einer dem Lautsprecher 20 zugewandten Innenfläche 110 des Türaußenblechs 11 abgestrahlt werden, derart reflektiert werden, dass die reflektierten Schallwellen R nicht oder höchstens unter einem flachen Winkel auf die Innenfläche 110 des Türaußenblechs 11 treffen können. Die Reflektion über die Reflektionsflächen 301 erfolgt derart, dass die reflektierten Schallwellen R (veranschaulicht in Fig. 3 anhand ihres Strahlengangs) parallel zur Haupterstreckungsebene E des Türaußenblechs 11 oder unter einem flachen Winkel zu dieser Haupterstreckungsebene E innerhalb des Nassraums N der Fahrzeugtür 1 umgelenkt werden. Auf diese Weise kann eine Körperschallanregung des Türaußenblechs 11 aufgrund senkrecht oder unter einem stumpfen Winkel auf das Türaußenblech 11 auftreffender Schallwellen wirkungsvoll unterdrückt werden, so dass eine Schwingungsanregung des Türaußenblechs 11 unterbunden oder zumindest gedämpft werden kann.

Der Diffusor 3 ist über Streben 32 mit dem Türmodul 2 verbunden. Wie in Fig. 4A und 4B veranschaulicht, können hierbei mehrere Streben 32 vorgesehen werden, die so an dem Diffusor 3 angeordnet sind, dass die Streben 32 eine Schallausbreitung der reflektierten Schallwellen R nicht oder nur unwesentlich beeinträchtigen und somit keine geschlossene Begrenzungsfläche für die Reflektierten Schallwellen R bereitstellen. Vom Lautsprecher 20 rückwärtig abgestrahlte Schallwellen werden somit an den Reflektionsflächen 301 des Diffusors 3 reflektiert und können an den Streben 32 vorbei und durch die Streben 32 hindurch parallel zur Ebene E abgelenkt werden.

Der beispielsweise nach Art eines Rhombus (Fig. 4A) oder nach Art eines Kegels (Fig. 4B) geformte Diffusor 3 weist eine Spitze 31 auf, die dem Lautsprecher 20 zugewandt ist. Diese Spitze 31 kann hierbei konzentrisch mit einer Mittenachse A des Lautsprechers 20 sein, die einer Rotationssymmetrieachse des eine konusförmige Membran aufweisenden Lautsprechers 20 entspricht und durch den Schwerpunkt des Lautsprechers 20 im Wesentlichen senkrecht zur Haupterstreckungsebene E des Türaußenblechs E weist.

Obwohl in Fig. 4A und Fig. 4B beispielhaft ein Diffusor 3 in Form eines Rhombus oder eines Kegels dargestellt ist, kann der Diffusor 3 grundsätzlich auch eine andere Form aufweisen. Mittels einer oder mehrerer Reflektionsflächen 301 werden hierbei Schallwellen derart reflektiert, dass sie zum einen nicht senkrecht auf das Türaußenblech 11 treffen können und zum anderen nicht direkt zurück zum Lautsprecher 20 gelenkt werden. Eine solche Reflektion direkt zurück zum Lautsprecher 20 könnte den nachteiligen Effekt haben, dass reflektierte Schallwellen den Lautsprecher 20 durchschallen und sich mit anderen vom Lautsprecher 20 abgestrahlten Schallwellen mischen, wodurch es zu einem Verschmieren oder Verfärben des vom Lautsprecher 20 abgestrahlten Klangs kommen kann.

Bei dem Ausführungsbeispiel gemäß Fig. 3 ist der Diffusor 3 mit dem Türmodul 2 verbunden. Der Diffusor 3 kann beispielsweise einstückig mit dem Türmodul 2, beispielsweise einem aus Kunststoff gefertigten Aggregateträger des Türmoduls 2, gefertigt sein. Es ergibt sich eine einfache Herstellung bei kostengünstiger Ausgestaltung des Diffusors 3.

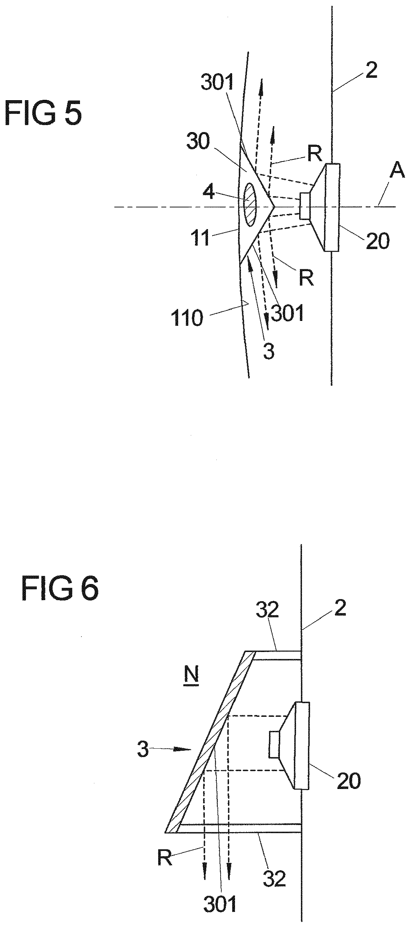

In anderer Ausgestaltung, wie in Fig. 5 veranschaulicht, kann der Diffusor 3 auch an dem Türaußenblech 11 befestigt sein. Wiederum kann der Diffusor 3 eine Spitze 31, die hin zum Lautsprecher 20 weist, und eine oder mehrere Reflektionsflächen 301, die schräg zu der Haupterstreckungsebene E des Türaußenblechs 11 gerichtet sind und eine geeignete Umlenkung der vom Lautsprecher 20 rückwärtig abgestrahlten Schallwellen bewirkt, umfassen.

Wie in Fig. 5 veranschaulicht, kann der Diffusor 3 im Sinne einer funktionalen Integration mit einem Crashpad 4 verbunden oder integral mit einem solchen Crashpad 4 ausgestaltet sein. Das Crashpad 4 dient zum Aufnehmen und Ableiten von insbesondere bei einem Seitenaufprall auf die Fahrzeugtür 1 wirkenden Crashkräften und kann beispielsweise eine geeignete Knautschzone zur Absorption von Crashenergie bereitstellen. Das Crashpad 4 kann beispielsweise nach Art einer Querstrebe im Nassraum N der Fahrzeugtür 1 angeordnet sein, kann aber auch im Sinne eines lokal wirkenden Crashpads vollständig in dem Körper 30 des Diffusors 3 eingeschlossen oder integral mit dem Körper 30 ausgebildet sein. Grundlegende Ausgestaltungen solcher Crashpads sind an sich bekannt, so dass an dieser Stelle hierauf nicht näher eingegangen werden soll.

Fig. 6 zeigt ein weiteres Ausführungsbeispiel eines Diffusors 3, der durch eine schräg gestellte Reflektionsfläche 301 gebildet ist, die über Streben 32 mit dem Türmodul 2 verbunden, beispielsweise einstückig mit dem Türmodul 2 ausgebildet ist. Die Reflektionsfläche 301 reflektiert rückwärtig vom Lautsprecher 20 abgestrahlte Schallwellen, so dass die reflektierten Schallwellen R nicht oder zumindest nur unter einem flachen Winkel auf das Türaußenblech 11 treffen können. Die reflektierten Schallwellen R werden hierbei von der Reflektionsfläche 301 durch die Streben 32 hindurch abgelenkt, wobei die Streben 32 den Ausbreitungsweg der reflektierten Schallwellen R nicht oder zumindest nicht wesentlich beeinträchtigen.

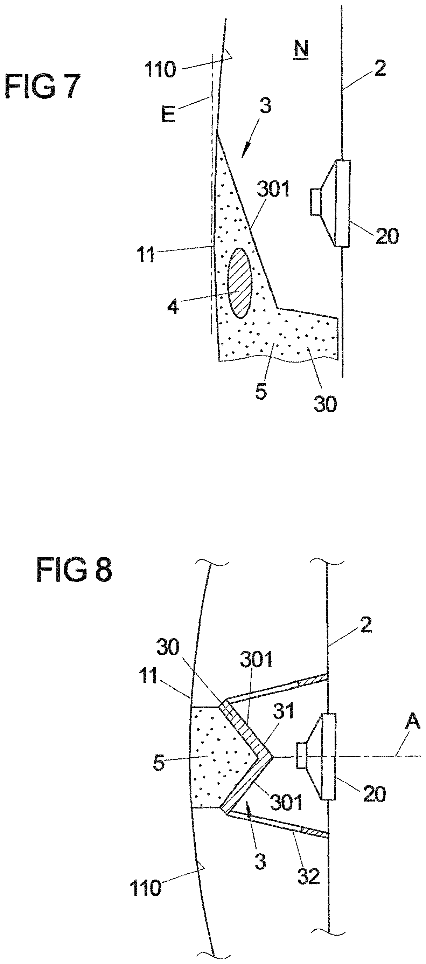

Bei einem weiteren, in Fig. 7 dargestellten Ausführungsbeispiel ist ein Diffusor 3 an dem Türaußenblech 11 angeordnet. Der Diffusor 3 erstreckt sich im Nassraum N der Fahrzeugtür bis hin zu dem Türmodul 2 und kann abstützend an dem Türmodul 2 oder dem Türinnenblech 10 anliegen. Der Diffusor 3 ist zudem mit einem Crashpad 4 verbunden oder integral mit diesem ausgebildet und zusätzlich mit einem Zusatzmaterial 5, beispielsweise in Form eines dämpfenden Materials, gefüllt. Über eine Reflektionsfläche 301, die wiederum schräg zu einer Haupterstreckungsebene E des Türaußenblechs 11 gerichtet ist, werden rückwärtig vom Lautsprecher 20 abgestrahlte Schallwellen reflektiert, so dass diese nicht senkrecht auf das Türaußenblech 11 treffen können.

Bei einem in Fig. 8 dargestellten Ausführungsbeispiel eines Diffusors ist dieser beispielsweise kegelförmig oder rhombusförmig ausgestaltet und über Streben 32 mit dem Türmodul 2 verbunden. Der Diffusor 3 ist zudem über ein Zusatzmaterial 5 beispielsweise in Form eines Dämpfungsmaterials gegenüber dem Türaußenblech 11 abgestützt, so dass über den Diffusor 3 eine abstützende Verbindung zwischen dem Türaußenblech 11 und dem Türmodul 2 geschaffen wird. Das Zusatzmaterial 5 ist hierbei so beschaffen, dass eine Schwingungsübertragung von dem Diffusor 3 auf das Türaußenblech 11 wirkungsvoll gedämpft ist, so dass ein Körperschall vom Diffusor 3 nicht hin zum Türaußenblech 11 übertragen werden kann.

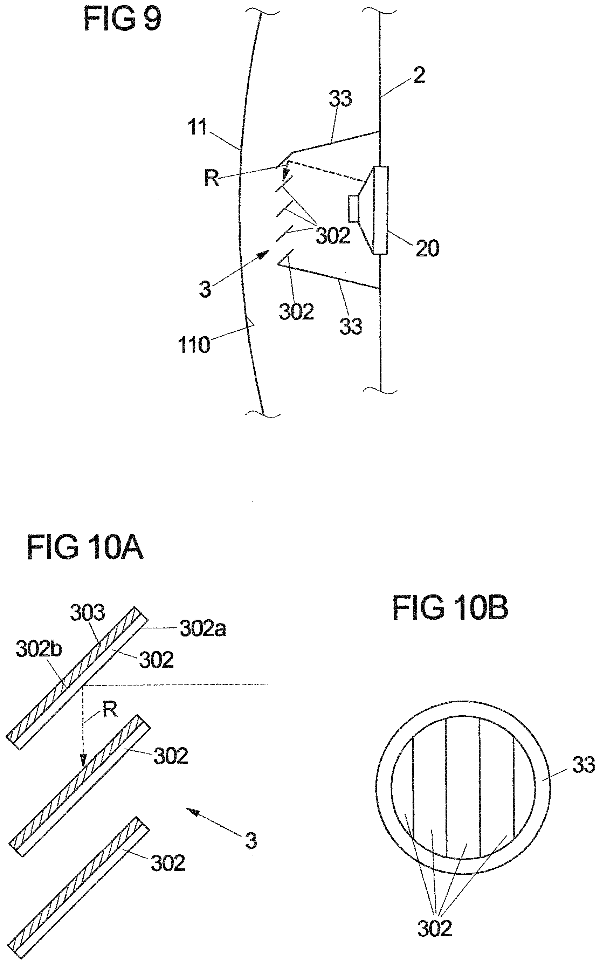

Bei einem in Fig. 9 dargestellten Ausführungsbeispiel ist der Diffusor 3 mit Lamellen 302 ausgestaltet, die so ausgebildet sind, dass sie eine Abstrahlung von Schallwellen senkrecht auf das Türaußenblech 11 verhindern. Die Lamellen 302 sind hierbei über eine geschlossene Begrenzungsfläche 33 nach Art eines Topfes mit dem Türmodul 2 verbunden und können, wie in der vergrößerten Ansicht gemäß Fig. 10A dargestellt ist, eine reflektierende, dem Lautsprecher 20 zugewandte Innenfläche 302a und eine mit einer absorbierenden Schicht 303 bedeckte Außenfläche 302b aufweisen.

Werden Schallwellen rückwärtig vom Lautsprecher 20 in Richtung des Türaußenblechs 11 abgestrahlt, so treffen diese zunächst auf die Innenfläche 302a der Lamellen 302 und werden reflektiert. Die an einer Lamelle 302 reflektierten Schallwellen R treffen hierbei auf die Außenfläche 302b einer benachbarten Lamelle 302 und werden dort durch die an der Außenfläche 302b angeordnete absorbierende Schicht 303 absorbiert oder zumindest weitestgehend gedämpft, so dass Schallwellen nicht oder zumindest nur stark gedämpft in Richtung auf das Türaußenblech 11 übertragen werden.

Die Lamellen 302 sind, wie in Fig. 10B dargestellt, derart angeordnet, dass sie sich, gesehen vom Lautsprecher 20 in Richtung des Türaußenblechs 11, überlappen, so dass die vom Lautsprecher 20 rückwärtig abgestrahlten Schallwellen vollständig an den Lamellen 302 reflektiert werden. Fig. 10B zeigt hierbei die Lamellen 302 gesehen vom Lautsprecher 20 her. Die Lamellen 302 bilden in dieser Blickrichtung eine geschlossene Fläche, an der die abgestrahlten Schallwellen reflektiert werden.

Eine absorbierende Schicht der vorangehend genannten Art kann grundsätzlich auch bei einem Diffusor 3, wie er anhand von Fig. 3 bis 8 erläutert worden ist, vorgesehen werden. Die absorbierende Schicht und auch eine Reflektionsfläche 301 kann hierbei so ausgestaltet sein, dass eine Absorption und/oder Reflektion in frequenzabhängiger Weise erfolgt. Beispielsweise kann vorgesehen sein, dass höherfrequente Anteile von Schallwellen an einer absorbierenden Schicht absorbiert werden, niederfrequente Anteile hingegen reflektiert werden. Auf diese Weise kann eine gezielte Beeinflussung von abgestrahlten Schallwellen innerhalb einzelner Frequenzbereiche erreicht werden, um auf diese Weise die abgestrahlten Schallwellen gezielt in einzelnen Frequenzbereichen zu dämpfen oder auszulöschen.

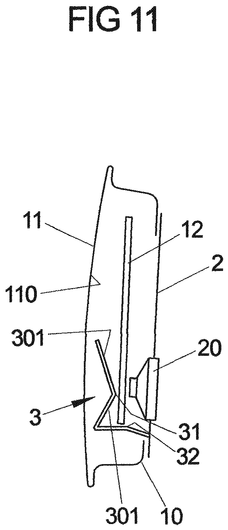

Fig. 11 zeigt eine beispielhafte Anordnung eines Diffusors 3 an einem Türmodul 2 über eine Strebe 32. Die Verbindung ist hierbei derart, dass eine Fensterscheibe 12 zwischen dem Diffusor 3 und dem Lautsprecher 20 hindurch bewegt werden kann und somit der Diffusor 3 außerhalb des Verstellwegs der Fensterscheibe 12 angeordnet ist. Um die Lage des Diffusors 3 relativ zum Türaußenblech 11 weiter festzulegen, kann zusätzlich eine Abstützung gegenüber dem Türaußenblech 11 nach der in Fig. 8 veranschaulichten Art vorgesehen sein.

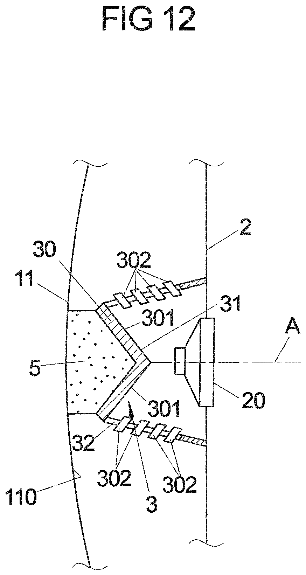

Fig. 12 zeigt ein weiteres Ausführungsbeispiel eines Schallleitelements in Form eines Diffusors 3, das gegenüber dem Ausführungsbeispiel gemäß Fig. 8 nur geringfügig modifiziert ist. So sind bei dem Ausführungsbeispiel gemäß Fig. 12 an den Streben 32 Lamellen 302 vorgesehen, die von dem Diffusor 3 reflektierte Schallwellen S leiten und umlenken, um eine vorteilhafte Abstrahlung dieser Schallwellen S aus dem Bereich des Diffusors 3 zu erhalten.

Die Ausrichtung der Lamellen 302 ist in Fig. 12 nur beispielhaft zu verstehen. Die Lamellen 302 sind so gerichtet, dass eine vorteilhafte Ableitung der Schallwellen S aus dem Diffusor 3 erreicht wird, eine Rückstrahlung von Schallwellen S in den Bereich des Diffusors 3 jedoch nach Möglichkeit verhindert ist.

Die Lamellen 302 können bei dem Ausführungsbeispiel gemäß Fig. 12, analog wie dies anhand von Fig. 9 und 10A, 10B beschrieben worden ist, einseitig oder beidseitig mit einem absorbierenden Material beschichtet sein.

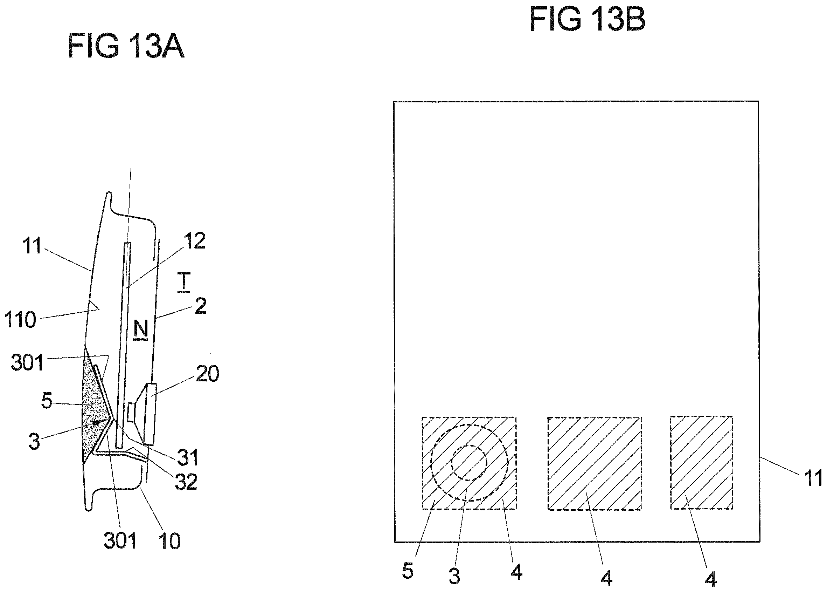

Ein weiteres Ausführungsbeispiel, das an das Ausführungsbeispiel gemäß Fig. 11 anknüpft, ist in Fig. 13A und 13B dargestellt. Bei diesem Ausführungsbeispiel ist, in Ergänzung zu dem Ausführungsbeispiel gemäß Fig. 11, an dem Diffusor 3 ein Füllmaterial 5 vorgesehen, das den Diffusor 3 gegenüber dem Türaußenblech 11 abstützt. Das Füllmaterial 5 ist dabei so beschaffen, dass eine Schwingungsübertragung von dem Diffusor 3 auf das Türaußenblech 11 gedämpft ist, so dass ein Körperschall vom Diffusor 3 nicht hin zum Türaußenblech 11 übertragen werden kann.

Wie in Fig. 13B dargestellt ist, ist das Füllmaterial 5 zur Abstützung des Diffusors 3 gegenüber dem Türaußenblech 11 in ein Crashpad 4 integriert. Das in Fig. 13B links dargestellte Crashpad 4 dient somit einerseits zur Aufnahme von Crashkräften, die insbesondere bei einem Seitencrash in die Fahrzeugtür 1 eingeleitet werden. Andererseits dient das Crashpad 4 aber auch zur Abstützung des Diffusors 3 und somit zur akustischen Dämpfung von Schallwellen, die vom Lautsprecher 20 in Richtung des Türaußenblechs 11 abgestrahlt werden.

Es können weitere Crashpads 4 vorgesehen sein, die einstückig mit dem in Fig. 13B links dargestellten Crashpad 4 ausgestaltet sein können oder die auch separat von dem in Fig. 13B links dargestellten Crashpad 4 vorliegen können.

Ein weiteres Ausführungsbeispiel eines Diffusors 3, das über Füllmaterial 5 gegenüber dem Türaußenblech 11 abgestützt ist, zeigen Fig. 14A und 14B. Fig. 14A zeigt hierbei eine Ansicht von oben in eine Fahrzeugtür 1 hinein. Fig. 14B zeigt eine Seitenansicht, betrachtet entlang der Fahrzeuglängsrichtung (bei bestimmungsgemäßen Einbau der Fahrzeugtür 1 in ein Fahrzeug).

Bei dem Ausführungsbeispiel gemäß Fig. 14A, 14B ist der Diffusor 3 über eine geschlossene Begrenzungsfläche 33 mit dem Aggregateträger des Türmoduls 2 verbunden, wobei diese geschlossene Begrenzungsfläche 33 außerhalb der Verschiebungsbahn der Fensterscheibe 12 angeordnet ist und bei geöffneter Fensterscheibe 12 (entsprechend der Stellung in Fig. 14A, 14B) die Fensterscheibe 12 umgreift. Über das Füllmaterial 5 ist der Diffusor 3 gegenüber dem Türaußenblech 11 abgestützt, wobei, wie vorangehend anhand von Fig. 13A, 13B beschrieben, die Abstützung in ein Crashpad 4 integriert sein kann.

Bei den vorangehend beschriebenen Ausführungsbeispielen ist jeweils ein Schallleitelement in Form eines Diffusors 3 vorgesehen, das zur Reflektion von rückwärtig vom Lautsprecher 20 abgestrahlten Schallwellen S dient in einer Weise, dass die Schallwellen S nicht in direkter Abstrahlung vom Lautsprecher 20 senkrecht auf die Innenfläche 110 des Türaußenblechs 11 treffen können. Auf diese Weise soll eine Schallanregung des Türaußenblechs 11 zumindest reduziert werden, und es soll verhindert werden, dass vom Türaußenblech 11 reflektierte Schallwellen wiederum durch den Lautsprecher 20 treten und auf diese Weise zu einer Verfärbung, einem Verschmieren oder Dröhnen des Lautsprecherklanges führen kann.

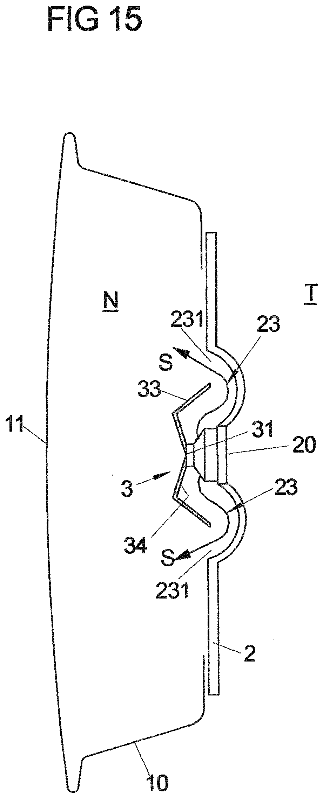

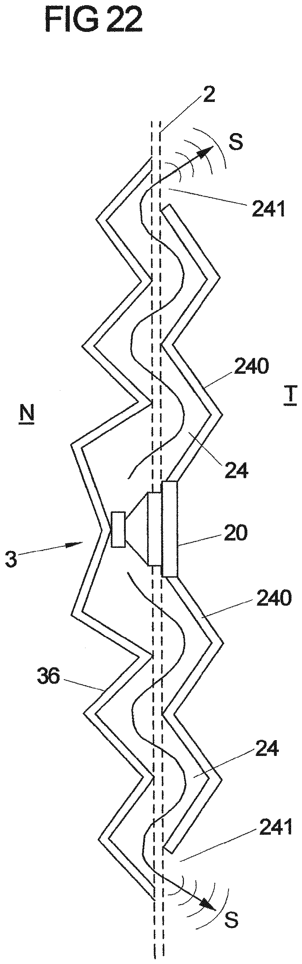

Anhand von Fig. 15 bis 24 sollen nachfolgend weitere Ausführungsbeispiele beschrieben werden, bei denen ein Schallleitelement als Führungskanal ausgestaltet ist, um rückwärtig vom Lautsprecher 20 abgestrahlten Schall in gezielter Weise vom Lautsprecher 20 wegzuleiten. Auf diese Weise soll eine gezielte Ankopplung eines Nassraums N der Fahrzeugtür 1 erreicht werden, die eine Verstärkung niederfrequenter Anteile des Schalls und eine Dämpfung hochfrequenter Anteile bewirkt (so bei den Ausführungsbeispielen gemäß Fig. 15 bis 21), oder es soll ein Führungskanal nach Art einer "Transmission Line" geschaffen werden, der Schall in gezielter Weise in einen Trockenraum T der Fahrzeugtür 1 unter vorteilhafter Phasen-/Laufzeitverschiebung zwischen vorderseitig und rückseitig der Lautsprechermembran abgestrahltem Schall sowie Anregung und Verstärkung niederfrequenter Anteile des Schalls leitet (so bei den Ausführungsbeispielen gemäß Fig. 22 bis 24).

Bei dem Ausführungsbeispiel gemäß Fig. 15 ist ein Schallleitelement 3 rückseitig eines Lautsprechers 20 vorgesehen, das zusammen mit dem Aggregateträger eines Türmoduls 2 einen Führungskanal 23 schafft, über den Schallwellen S in einen zwischen dem Türinnenblech 10 und dem Türaußenblech 11 gebildeten Nassraum N der Fahrzeugtür 1 eingeleitet werden. Das Schallleitelement 3 kann einstückig mit dem Aggregateträger des Türmoduls 2 ausgebildet sein. Das Schallleitelement 3 kann aber auch als separates Bauteil hergestellt und mittels einer Clipsverbindung oder dergleichen an den Aggregateträger angesetzt sein.

Das Schallleitelement 3 bildet mit Wandungen 230, 34 einen Führungskanal 23 aus, über den Schallwellen S vom Lautsprecher 20 in den Nassraum N der Fahrzeugtür 1 eingeleitet werden. Mittels des Führungskanals 23 wird das Luftvolumen des Nassraums N in gezielter Weise angekoppelt, wobei der Führungskanal 23 so beschaffen sein kann, dass eine Ankopplung insbesondere im niederfrequenten Bereich erfolgt, hochfrequente Anteile des Schalls aber gedämpft werden.

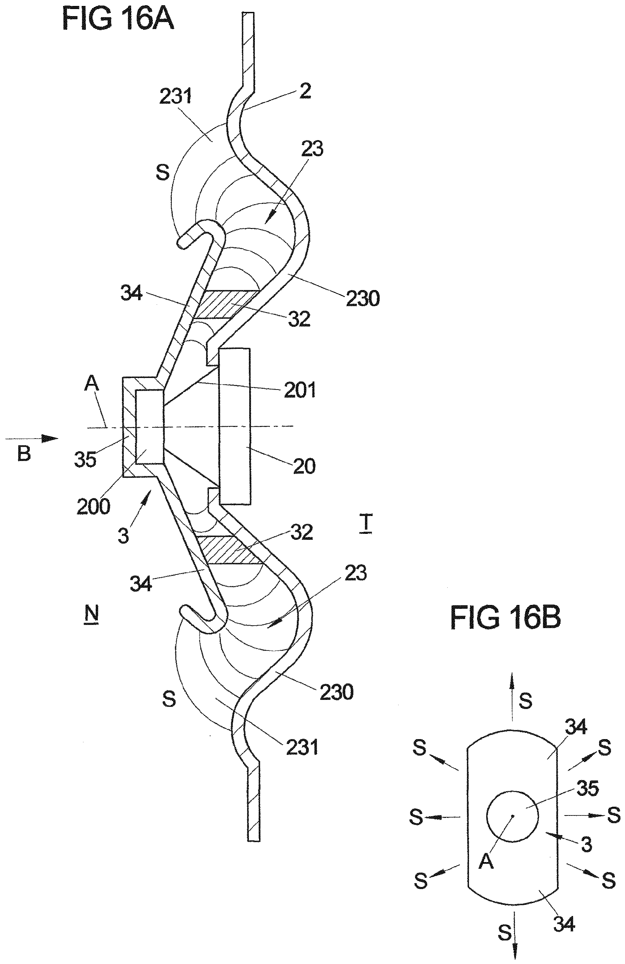

Fig. 16A, 16B zeigen ein konkretes Ausführungsbeispiel einer solchen Anordnung. Ein Schallleitelement 3 ist über eine Befestigungsstelle 35 mit einem Magneten 200 des Lautsprechers 20 verbunden, wobei der Magnet 200 über einen Lautsprecherkorb 201 mit dem Aggregateträger des Türmoduls 2 verbunden ist. Das Schallleitelement 3 weist eine Wandung 34 auf, die, wie aus der Ansicht gemäß Fig. 16B ersichtlich, eine näherungsweise rechteckige Gestalt aufweist (Fig. 16B zeigt das Schallleitelement 3 betrachtet in die Blickrichtung B gemäß Fig. 16A). Das Schallleitelement 3 ist über Streben 32 mit dem Aggregateträger des Türmoduls 2 verbunden und darüber an dem Aggregateträger gehalten, wobei das Schallleitelement 3 einstückig mit dem Aggregateträger beispielsweise mittels Kunststoffspritzgießen hergestellt oder auch als separates Bauteil ausgebildet und nachträglich an den Aggregateträger angesetzt sein kann.

Das Schallleitelement 3 bildet mit seiner Wandung 34 zusammen mit einer Wandung 230 des Aggregateträgers einen Führungskanal 23 aus, der quer zur Mittenachse A des Lautsprechers 20 geöffnet ist und somit, wie in Fig. 16B dargestellt, eine Schallabstrahlung in sämtliche Raumrichtungen quer zur Mittenachse A ermöglicht.

Durch die Wandungen 230, 34 werden die Schallwellen S zwischen dem Schallleitelement 3 und dem Aggregateträger des Türmoduls 2 geleitet und damit in den Nassraum N der Fahrzeugtür 1 geführt, wobei durch die Formgebung des Führungskanals 23 gezielt eine Anregung niederfrequenter Schallanteile im Luftvolumen des Nassraums N erfolgen kann, hochfrequente Anteile des Schalls hingegen gedämpft werden.

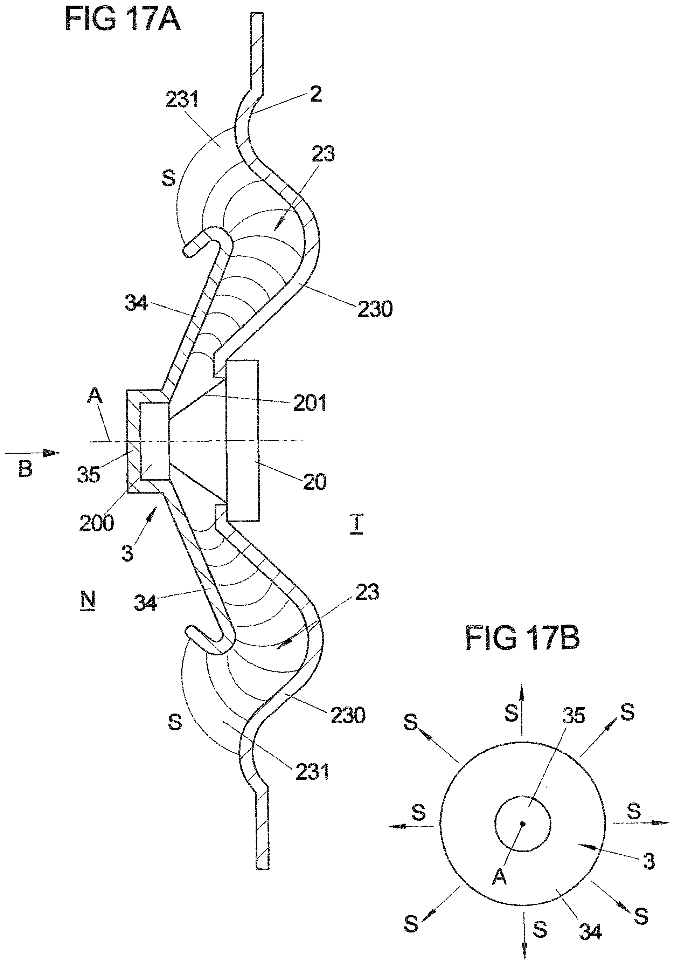

Bei dem Ausführungsbeispiel gemäß Fig. 16A, 16B weist das Schallleitelement 3 eine näherungsweise rechteckige Gestalt auf (bei rückwärtiger Ansicht in die Blickrichtung B, siehe Fig. 16B). Wie in Fig. 17A, 17B dargestellt, kann das Schallleitelement aber auch im Wesentlichen rotationssymmetrisch um die Mittenachse A des Lautsprechers 20 ausgebildet sein, so dass sich in der rückwärtigen Ansicht in die Blickrichtung B, dargestellt in Fig. 17B, eine näherungsweise kreisrunde Gestalt des Schallleitelements 3 ergibt.

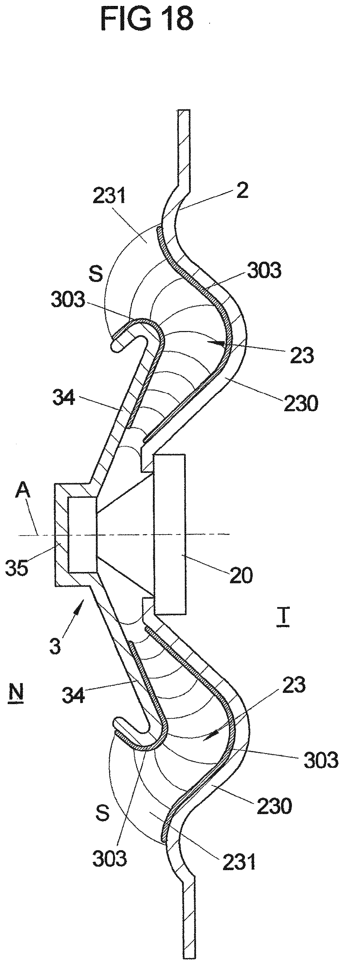

Wie in Fig. 18 dargestellt, können sowohl bei dem Ausführungsbeispiel gemäß Fig. 16A, 16B als auch bei dem Ausführungsbeispiel gemäß Fig. 17A, 17B die Wandungen 230, 34 mit einer absorbierenden Schicht 303 versehen sein, die derart ausgestaltet sein kann, dass z. B. niederfrequente Anteile im Wesentlichen ungedämpft durch den Führungskanal 23 gelangen können, hochfrequente Anteile hingegen akustisch gedämpft werden, so dass hochfrequente Anteile in gezielter Weise ausgefiltert werden.

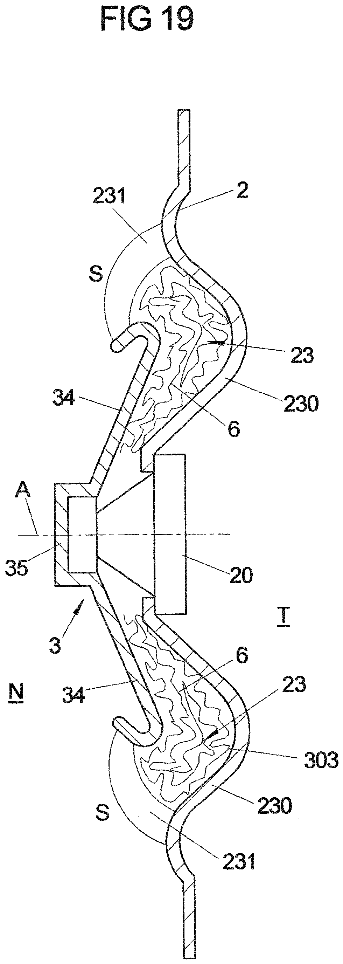

Ebenso ist denkbar, wie in Fig. 19 dargestellt, den Führungskanal 23 zumindest abschnittsweise mit einem 6 zu füllen, der dazu ausgestaltet sein kann, niederfrequente Anteile passieren zu lassen, hochfrequente Anteile des Schalls hingegen zu dämpfen.

Durch das Verwenden einer absorbierenden Schicht 303 oder eines Füllstoffs 6 kann das frequenzselektive Verhalten des Führungskanals 23 weiter modifiziert und in gewünschter Weise angepasst werden.

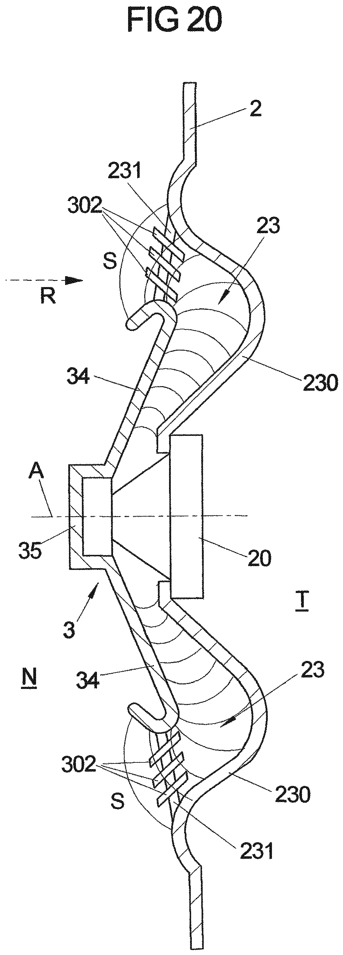

Der Führungskanal 23 öffnet sich über eine Öffnung 302 hin zum Nassraum N, wobei diese Öffnung 302 um die Mittenachse A umläuft und somit, wie in Fig. 16B bzw. 17B dargestellt, eine Schallabstrahlung radial zur Mittenachse A ermöglicht wird. Wie in Fig. 20 dargestellt, können im Bereich der Öffnung 231 Lamellen 302 angeordnet sein, die so beschaffen sind, dass die Schallwellen S in gewünschter Weise aus dem Führungskanal 23 heraus geleitet werden.

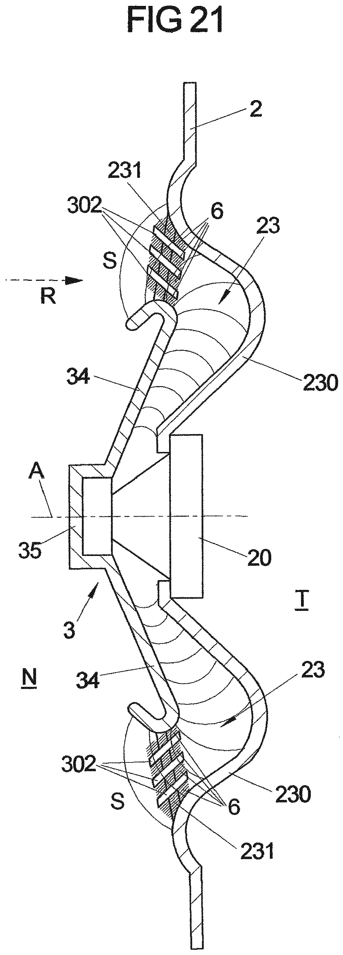

Wie in Fig. 21 dargestellt, können in weiterer Modifikation zwischen den Lamellen 302 Pakete von 6 angeordnet sein, die somit die Öffnung 231 weitestgehend verschließen. Der 6 ist vorzugsweise so beschaffen, dass hochfrequente Anteile des Schalls gedämpft werden, niederfrequente Anteile hingegen in im Wesentlichen ungedämpfter Weise passieren können.

Durch die Lamellen 302 kann insbesondere auch verhindert werden, dass vom Türaußenblech 11 zurückgestrahlte Schallwellen R' wiederum in den Führungskanal 23 einkoppeln können. Mittels der Lamellen 302 können solche zurückgestrahlten Schallwellen R' reflektiert und zurück in den Nassraum N geworfen werden, so dass ein Einkoppeln dieser zurückgestrahlten Schallwellen R' in den Führungskanal 23 verhindert ist.

Fig. 22 bis 24 zeigen Ausführungsbeispiele eines Schallleitelements 3, das zusammen mit dem Aggregateträger eines Türmoduls 2 einen Führungskanal 240 bildet, der sich nach Art einer Röhre schneckenförmig oder mäanderförmig oder auch in gänzlich anderer Gestalt an dem Türmodul 2 erstreckt und auf diese Weise eine sogenannte "Transmission Line" ausbildet, die eine Resonanz insbesondere im niederfrequenten Bereich aufweisen kann und/oder eine gezielte Phasen-/ Laufzeitverschiebung zwischen vorderseitig und rückseitig der Lautsprechermembran abgestrahltem Schall bewirkt, und somit zur Anregung und Übertragung insbesondere der niederfrequenten Anteile des Schalls dient.

Das Schallelement 3 kann zur Ausbildung des Führungskanals 24 integral mit dem Aggregateträger des Türmoduls 2 gebildet sein. Denkbar ist auch, dass das Schallleitelement 3 als zusätzliches Bauteil an den Aggregateträger 2 angesetzt wird, wobei vorgesehen sein kann, dass der Führungskanal 24 erst in angesetztem Zustand des Schallelements 3 zusammen mit dem Aggregateträger des Türmoduls 2 gebildet wird oder dass der Führungskanal 24 vollständig an dem Schallleitelement 3 ausgebildet ist, bereits vor Montage des Schallleitelements 3 vorliegt und an den Aggregateträger 2 des Türmoduls 2 angesetzt wird.

Durch den durch Wandungen 240, 36 gebildeten Führungskanal 24 hindurch gelangen die Schallwellen S in den Bereich einer Öffnung 241, über die die Schallwellen S in den Trockenraum T der Fahrzeugtür 1, der an einer dem Nassraum N abgewandten Seite des Türmoduls 2 gelegenen ist, abgestrahlt werden.

Der durch den Führungskanal 24 gebildete Schallweg kann beispielsweise eine Länge von einem Viertel der abgestrahlten Wellenlänge betragen, bezogen auf eine mittlere Wellenlänge in einem zu verstärkenden Wellenlängenbereich. Der Führungskanal 24 bildet somit einen röhrenförmigen Kanal für abgestrahlte Schallwellen S, dessen Länge gezielt so angepasst ist, dass die Schallwellen S in einem vorbestimmten Wellenlängenbereich gezielt unter phasen-/laufzeitverschobener Abstrahlung der vorder- und rückseitig der Lautsprechermembran abgestrahlten Schallanteile übertragen und somit verstärkt werden, außerhalb dieses Wellenlängenbereichs hingegen eine Dämpfung der Schallwellen S erfolgt.

Es können mehrere Führungskanäle 24 vorgesehen sein, die sich beispielsweise strahlenförmig von dem Lautsprecher 20 erstrecken und über jeweils eine Öffnung 241 hin zum Trockenraum T öffnen.

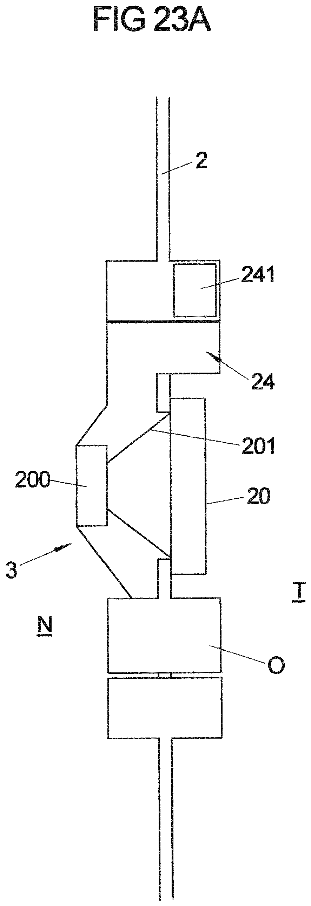

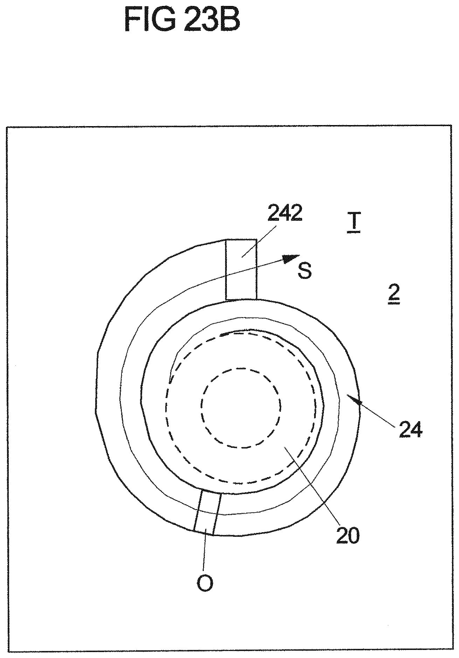

Es kann aber auch, wie in Fig. 23A und 23B dargestellt, ein einzelner Führungskanal 24 vorgesehen sein, der sich schneckenförmig an dem Türmodul 2 erstreckt. Der Führungskanal 24 geht aus von dem Lautsprecher 20, verläuft um den Lautsprecher 20 herum und öffnet sich mit einer Öffnung 241 hin zum Trockenraum T.

Wie sich aus Fig. 23A ergibt, weist der Führungskanal 24 einen Öffnungsquerschnitt O auf, der die lichte Weite innerhalb des Führungskanals 24 beschreibt. Der Öffnungsquerschnitt O kann, wie bei dem dargestellten Ausführungsbeispiel gezeigt, rechteckig geformt sein. Denkbar ist aber auch, den Öffnungsquerschnitt O rund oder oval zu formen.

Der Öffnungsquerschnitt O kann über den Erstreckungsweg des Führungskanals 24 in Form und Größe konstant sein. Denkbar ist aber auch, dass der Öffnungsquerschnitt O sich in Form und/oder Größe entlang des Führungskanals 24 ändert. Beispielsweise kann sich der Öffnungsquerschnitt O, wie in Fig. 23B dargestellt, in Richtung des Schallausbreitungswegs kontinuierlich weiten, so dass der Öffnungsquerschnitt O an dem dem Lautsprecher 20 angenäherten Ende des Führungskanals 24 kleiner ist als im Bereich der Öffnung 241.

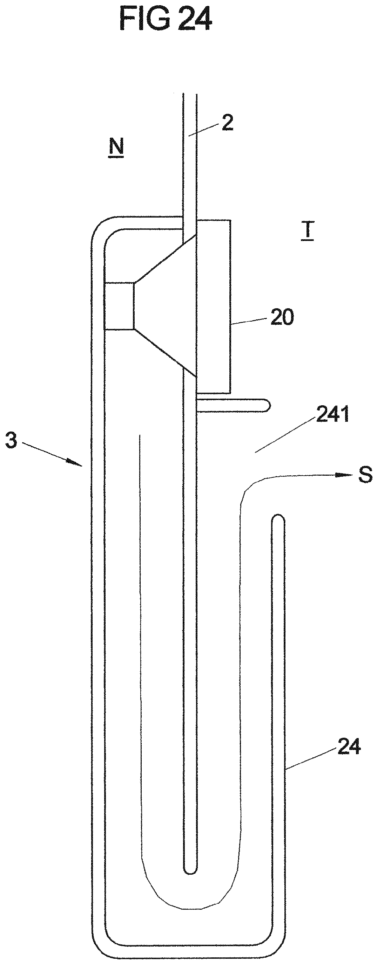

Wie in Fig. 24 dargestellt, kann der Führungskanal 24 sich auch mäanderförmig an dem Türmodul 2 erstrecken, wobei die Länge des Führungskanals 24 wiederum gezielt dem zu übertragenden Wellenlängenbereich 24 angepasst ist.

Bei den Ausführungsbeispielen gemäß Fig. 22 bis 24 kann innerhalb des Führungskanals 24 auch ein Füllstoff angeordnet sein, der beispielsweise für hochfrequente Anteile dämpfend wirkt, niederfrequente Anteile hingegen nahezu unbeeinflusst passieren lässt.

Denkbar ist auch, die Wandungen 240, 36 des Führungskanals 24 mit einem geeigneten, frequenzselektiven Material zu beschichten.

Der der Erfindung zugrundeliegende Gedanke ist nicht auf die vorangehend geschilderten Ausführungsbeispiele beschränkt, sondern lässt sich auch bei gänzlich anders gearteten Ausführungsformen verwirklichen. Insbesondere ist die Formgebung des Diffusors nicht auf die vorangehend geschilderten konkreten Ausführungsbeispiele beschränkt, sondern kann grundsätzlich auch beliebig anders geformt sein, solange von einem Lautsprecher in Richtung eines Türaußenblechs abgestrahlte Schallwellen in geeigneter Weise zur Dämpfung der Anregung von Körperschall an dem Türaußenblech reflektiert werden.

### Bezugszeichenliste

- 1: Fahrzeugtür
- 10: Türinnenblech
- 11: Türaußenblech
- 110: Innenfläche
- 12: Fensterscheibe
- 13: Türrahmen
- 2: Türmodul
- 20: Lautsprecher
- 200: Magnet
- 201: Lautsprecherkorb
- 21: Antriebseinheit
- 22: Türinnengriff
- 23: Führungskanal
- 230: Wandung
- 231: Öffnung
- 24: Führungskanal
- 240: Wandung
- 241: Öffnung
- 3: Schallleitelement (Diffusor)
- 30: Körper
- 301: Reflektionsfläche
- 302: Lamelle
- 302a: Vorderseite
- 302b: Rückseite
- 303: Absorbierende Schicht
- 31: Spitze
- 32: Streben
- 33: Geschlossene Begrenzungsfläche
- 34: Wandung
- 35: Befestigungsstelle
- 36: Wandung
- 4: Crashpad
- 5: Füllmaterial
- 6: Füllstoff
- α: Winkel
- A: Mittenachse
- B: Blickrichtung
- E: Haupterstreckungsebene
- N: Nassraum
- O: Öffnungsquerschnitt
- R: Reflektierte Schallwellen
- R': Zurückgestrahlte Schallwellen
- S: Schallwellen
- T: Trockenraum
- V: Volumen

## Patentansprüche

1. Fahrzeugtür, mit
- einem Türinnenblech (10),
- einem Türaußenblech (11) mit einer dem Türinnenblech zugewandten Innenfläche (110),
- einem an dem Türinnenblech angeordneten, zum Türaußenblech beabstandeten Lautsprecher (20) zum Erzeugen von akustischen Schallwellen und
- einem Schallleitelement (3), das ausgebildet ist, vom Lautsprecher (20) in Richtung des Türaußenblechs (11) abgestrahlte Schallwellen (S) umzulenken und in einen Nassraum (N) der Fahrzeugtür (1), der zwischen dem Türinnenblech (10) und dem Türaußenblech (11) gebildet ist, und/oder in einen Trockenraum (T) der Fahrzeugtür (1), der an einer dem Türaußenblech (11) abgewandten Seite des Türinnenblechs (10) gebildet ist, zu leiten,
**dadurch gekennzeichnet,**
**dass** das Schallleitelement (3) in ein Trägerelement eines Türmoduls (2) derart integriert ist, dass es mit dem Trägerelement eine einstückige Einheit bildet.

2. Fahrzeugtür nach Anspruch 1, **dadurch gekennzeichnet, dass** das Schallleitelement durch einen zwischen dem Lautsprecher (20) und dem Türaußenblech (11) angeordneten Diffusor (3) gebildet ist, der ausgebildet ist, vom Lautsprecher (20) in Richtung des Türaußenblechs (11) abgestrahlte Schallwellen (S) derart zu reflektieren, dass sie nicht in direkter Abstrahlung senkrecht auf die Innenfläche (110) des Türaußenblechs (11) treffen.

3. Fahrzeugtür nach Anspruch 2, **dadurch gekennzeichnet, dass** das Schallleitelement (3) eine Reflektionsfläche (301) aufweist, die unter einem schrägen Winkel (α) zu einer Haupterstreckungsebene (E), entlang derer sich das Türaußenblech (11) erstreckt, gerichtet ist.

4. Fahrzeugtür nach Anspruch 2 oder 3, **dadurch gekennzeichnet, dass** das Schallleitelement (3) einen Körper (30) in Form eines Rhombus aufweist.

5. Fahrzeugtür nach Anspruch 2 oder 3, **dadurch gekennzeichnet, dass** das Schallleitelement (3) einen Körper (30) in Form eines Kegels aufweist.

6. Fahrzeugtür nach Anspruch 4 oder 5, **dadurch gekennzeichnet, dass** der Körper (30) eine dem Lautsprecher (20) zugekehrte Spitze (31) aufweist, wobei die Spitze (31) insbesondere konzentrisch zu einer durch den Schwerpunkt des Lautsprechers (20) weisenden, entlang einer Hauptabstrahlrichtung des Lautsprechers (20) verlaufenden Mittenachse (A) des Lautsprechers (20) angeordnet ist.

7. Fahrzeugtür nach einem der Ansprüche 2 bis 6, **dadurch gekennzeichnet, dass** das Schallleitelement (3) über Streben (32) mit dem Türinnenblech (10) oder einem an dem Türinnenblech (10) angeordneten Türmodul (2) befestigt ist, wobei an den Streben (32) Lamellen (302) zur Reflektion von an dem Schallleitelement (3) reflektierten Schallwellen (S) angeordnet sind.

8. Fahrzeugtür nach Anspruch 2, **dadurch gekennzeichnet, dass** das Schallleitelement (3) eine Anzahl von Lamellen (302) aufweist, die unter einem schrägen Winkel zu einer Haupterstreckungsebene (E), entlang derer sich das Türaußenblech (11) erstreckt, gerichtet sind.

9. Fahrzeugtür nach Anspruch 7 oder 8, **dadurch gekennzeichnet, dass** eine absorbierende Schicht (303) zur Absorption von Schallwellen (S) in einem vorbestimmten Frequenzbereich ausgestaltet ist.

10. Fahrzeugtür nach einem der Ansprüche 2 bis 9, **dadurch gekennzeichnet, dass** das Schallleitelement (3) ein zur Aufnahme von Crashkräften ausgebildetes Crashpad (4) aufweist oder mit einem Crashpad (4) verbunden ist.

11. Fahrzeugtür nach einem der Ansprüche 2 bis 10, **dadurch gekennzeichnet, dass** das Schallleitelement (3) mit einem akustisch dämpfenden Zusatzmaterial (5) gefüllt oder mit einem solchen Zusatzmaterial (5) verbunden ist.

12. Fahrzeugtür nach einem der vorangehenden Ansprüche, **dadurch gekennzeichnet, dass** das Schallleitelement (3) einen Führungskanal (23, 24) zum Leiten von Schallwellen (S) weg von dem Lautsprecher (20) bildet.

13. Fahrzeugtür nach Anspruch 12, **dadurch gekennzeichnet, dass** der Führungskanal (23, 24) eine Öffnung (231, 241) in den Nassraum (N) und/oder in den Trockenraum (T) aufweist, wobei im Bereich der Öffnung (231, 241) beispielsweise Lamellen (302) zum Leiten von Schallwellen (S) angeordnet sind.

14. Fahrzeugtür nach Anspruch 12 oder 13, **dadurch gekennzeichnet, dass**
- der Führungskanal (23, 24) zumindest abschnittsweise mit einem Füllstoff (6) zur frequenzselektiven Dämpfung von Schallwellen (S) gefüllt ist und/oder
- zumindest eine Wandung (230, 34; 240, 36) des Führungskanals (23, 24) zumindest abschnittsweise mit einem absorbierenden Schicht (303) zur frequenzselektiven Dämpfung von Schallwellen (S) bedeckt ist und/oder
- der Führungskanal (23) quer zu einer entlang einer Hauptabstrahlrichtung des Lautsprechers (20) verlaufenden Mittenachse (A) des Lautsprechers (20) zum Abstrahlen von Schallwellen (S) geöffnet ist.

15. Fahrzeugtür nach einem der Ansprüche 12 bis 14, **dadurch gekennzeichnet, dass** der Führungskanal (24) - betrachtet in einer Ebene quer zu einer Hauptausbreitungsrichtung von Schallwellen (S) in dem Führungskanal (24) - einen kreisrunden, ovalen oder rechteckigen Öffnungsquerschnitt (O) aufweist, wobei beispielsweise der Öffnungsquerschnitt (O) entlang der Hauptausbreitungsrichtung der Schallwellen (S) variiert, insbesondere sich in die Hauptausbreitungsrichtung der Schallwellen (S) weitet.

## Claims

1. A vehicle door, comprising
- an inner door panel (10),
- an outer door panel (11) with an inner surface (110) facing the inner door panel,
- a loudspeaker (20) which is arranged on the inner door panel, is spaced apart from the outer door panel and is intended for generating acoustic sound waves, and
- a sound-guiding element (3) which is designed to deflect sound waves (S) radiated in the direction of the outer door panel (11) by the loudspeaker (20) and to guide said sound waves into a wet chamber (N) of the vehicle door (1), which wet chamber is formed between the inner door panel (10) and the outer door panel (11), and/or into a dry chamber (T) of the vehicle door (1), which dry chamber is formed on a side of the inner door panel (10) that faces away from the outer door panel (11),
**characterized in that**
the sound-guiding element (3) is integrated into a carrier element of a door module (2) in such a manner that it forms an integral unit with the carrier element.

2. The vehicle door as claimed in claim 1, **characterized in that** the sound-guiding element is formed by a diffuser (3) which is arranged between the loudspeaker (20) and the outer door panel (11) and is designed to reflect sound waves (S) radiated in the direction of the outer door panel (11) by the loudspeaker (20) in such a manner that they do not strike in a directly radiated manner perpendicularly against the inner surface (110) of the outer door panel (11).

3. The vehicle door as claimed in claim 2, **characterized in that** the sound-guiding element (3) has a reflection surface (301) which is directed at an oblique angle (α) to a main plane of extent (E) along which the outer door panel (11) extends.

4. The vehicle door as claimed in claim 2 or 3, **characterized in that** the sound-guiding element (3) has a body (30) in the form of a rhombus.

5. The vehicle door as claimed in claim 2 or 3, **characterized in that** the sound-guiding element (3) has a body (30) in the form of a cone.

6. The vehicle door as claimed in claim 4 or 5, **characterized in that** the body (30) has a tip (31) facing the loudspeaker (20), wherein the tip (31) in particular is arranged concentrically with respect to a center axis (A) of the loudspeaker (20), the center axis pointing through the center of gravity of the loudspeaker (20) and running along a main direction of radiation of the loudspeaker (20).

7. The vehicle door as claimed in one of claims 2 to 6, **characterized in that** the sound-guiding element (3) is fastened via braces (32) to the inner door panel (10) or to a door module (2) arranged on the inner door panel (10), wherein slats (302) for reflecting sound waves (S) reflected at the sound-guiding element (3) are arranged on the braces (32).

8. The vehicle door as claimed in claim 2, **characterized in that** the sound-guiding element (3) has a number of slats (302) which are directed at an oblique angle to a main plane of extent (E) along which the outer door panel (11) extends.

9. The vehicle door as claimed in claim 7 or 8, **characterized in that** an absorbing layer (303) is configured for absorbing sound waves (S) within a predetermined frequency range.

10. The vehicle door as claimed in one of claims 2 to 9, **characterized in that** the sound-guiding element (3) has a crash pad (4) designed to absorb crash forces, or is connected to a crash pad (4).

11. The vehicle door as claimed in one of claims 2 to 10, **characterized in that** the sound-guiding element (3) is filled with an acoustically damping additional material (5) or is connected to such an additional material (5).

12. The vehicle door as claimed in one of the preceding claims, **characterized in that** the sound-guiding element (3) forms a guide channel (23, 24) for guiding sound waves (S) away from the loudspeaker (20).

13. The vehicle door as claimed in claim 12, **characterized in that** the guide channel (23, 24) has an opening (231, 241) into the wet chamber (N) and/or into the dry chamber (T), wherein for example slats (302) for guiding sound waves (S) are arranged in the region of the opening (231, 241).

14. The vehicle door as claimed in claim 12 or 13, **characterized in that**
- the guide channel (23, 24) is at least partially filled with a filler (6) for the frequency-selective damping of sound waves (S) and/or
- at least one wall (230, 34; 240, 36) of the guide channel (23, 24) is at least partially covered with an absorbing layer (303) for the frequency-selective damping of sound waves (S) and/or
- the guide channel (23) is open transversely with respect to a center axis (A) of the loudspeaker (20), which center axis runs along a main direction of radiation of the loudspeaker (20), for the radiation of sound waves (S).

15. The vehicle door as claimed in one of claims 12 to 14, **characterized in that** the guide channel (24) has a circular, oval or rectangular opening cross section (O) - as viewed in a plane transversely with respect to a main direction of propagation of sound waves (S) in the guide channel (24), wherein for example the opening cross section (O) varies along the main direction of propagation of the sound waves (S), in particular widens in the main direction of propagation of the sound waves (S).

## Revendications

1. Portière de véhicule, avec
- une tôle intérieure de portière (10),
- une tôle extérieure de portière (11) avec une surface intérieure (110) tournée vers la tôle intérieure de portière,
- un haut-parleur (20) disposé au niveau de la tôle intérieure de portière, espacé de la tôle extérieure de portière, servant à produire des ondes sonores acoustiques, et
- un élément de guidage du son (3) qui est réalisé pour dévier des ondes sonores (S) émises par le haut-parleur (20) en direction de la tôle extérieure de portière (11) et pour les conduire dans un espace humide (N) de la portière de véhicule (1), qui est formé entre la tôle intérieure de portière (10) et la tôle extérieure de portière (11), et/ou dans un espace sec (T) de la portière de véhicule (1), qui est formé au niveau d'un côté, opposé à la tôle extérieure de portière (11), de la tôle intérieure de portière (10),
**caractérisée en ce**
**que** l'élément de guidage du son (3) est intégré dans un élément de support d'un module de portière (2) de telle manière qu'il forme une unité d'un seul tenant avec l'élément de support.

2. Portière de véhicule selon la revendication 1, **caractérisée en ce que** l'élément de guidage du son est formé par un diffuseur (3) disposé entre le haut-parleur (20) et la tôle extérieure de portière (11), lequel est réalisé pour réfléchir des ondes sonores (S) émises par le haut-parleur (20) en direction de la tôle extérieure de portière (11) de telle manière que, selon une émission directe, elles ne rencontrent pas de manière perpendiculaire la face intérieure (110) de la tôle extérieure de portière (11).

3. Portière de véhicule selon la revendication 2, **caractérisée en ce que** l'élément de guidage du son (3) présente une surface réfléchissante (301), qui est dirigée selon un angle oblique (α) par rapport à un plan d'extension principal (E), le long duquel la tôle extérieure de portière (11) s'étend.

4. Portière de véhicule selon la revendication 2 ou 3, **caractérisée en ce que** l'élément de guidage du son (3) présente un corps (30) sous la forme d'un losange.

5. Portière de véhicule selon la revendication 2 ou 3, **caractérisée en ce que** l'élément de guidage du son (3) présente un corps (30) sous la forme d'un cône.

6. Portière de véhicule selon la revendication 4 ou 5, **caractérisée en ce que** le corps (30) présente une pointe (31) tournée vers le haut-parleur (20), la pointe (31) étant disposée en particulier de manière concentrique par rapport à un axe central (A) du haut-parleur (20) qui passe à travers le centre de gravité du haut-parleur (20) et s'étend le long d'une direction d'émission principale du haut-parleur (20),.

7. Portière de véhicule selon l'une quelconque des revendications 2 à 6, **caractérisée en ce que** l'élément de guidage de son (3) est fixé par l'intermédiaire d'entretoises (32) à la tôle intérieure de portière (10) ou à un module de portière (2) disposé au niveau de la tôle intérieure de portière (10), dans laquelle des lamelles (302) servant à réfléchir des ondes sonores (S) réfléchies au niveau de l'élément de guidage de son (3) sont disposées au niveau des entretoises (32).

8. Portière de véhicule selon la revendication 2, **caractérisée en ce que** l'élément de guidage de son (3) présente un nombre donné de lamelles (302), qui sont dirigées selon un angle oblique par rapport à un plan d'extension principal (E), le long duquel la tôle extérieure de portière (11) s'étend.

9. Portière de véhicule selon la revendication 7 ou 8, **caractérisée en ce qu'**une couche (303) d'absorption est configurée aux fins de l'absorption d'ondes sonores (S) dans une plage de fréquences prédéterminée.

10. Portière de véhicule selon l'une quelconque des revendications 2 à 9, **caractérisée en ce que** l'élément de guidage de son (3) présente un matelas de collision (4) servant à recevoir des forces de collision ou est relié à un matelas de collision (4).

11. Portière de véhicule selon l'une quelconque des revendications 2 à 10, **caractérisée en ce que** l'élément de guidage de son (3) est rempli d'un matériau additionnel (5) à atténuation acoustique ou est relié à un matériau additionnel (5) de ce type.

12. Portière de véhicule selon l'une quelconque des revendications précédentes, **caractérisée en ce que** l'élément de guidage du son (3) forme un canal de guidage (23, 24) servant à conduire des ondes sonores (S) loin du haut-parleur (20).

13. Portière de véhicule selon la revendication 12, **caractérisée en ce que** le canal de guidage (23, 24) présente une ouverture (231, 241) dans l'espace humide (N) et/ou dans l'espace sec (T), dans laquelle des lamelles (302) servant à conduire des ondes acoustiques (S) sont par exemple disposées dans la zone de l'ouverture (231, 241).

14. Portière de véhicule selon la revendication 12 ou 13, **caractérisée en ce que**
- le canal de guidage (23, 24) est rempli au moins par endroits d'une charge (6) servant à atténuer de manière sélective en fréquence des ondes sonores (S), et/ou
- au moins une paroi (230, 34 ; 240, 36) du canal de guidage (23, 24) est recouverte au moins par endroits d'une couche (303) d'absorption servant à atténuer de manière sélective en fréquence des ondes sonores (S), et/ou
- le canal de guidage (23) est ouvert de manière transversale par rapport à un axe central (A), s'étendant le long d'une direction d'émission principale du haut-parleur (20), du haut-parleur (20) afin d'émettre des ondes sonores (S).

15. Portière de véhicule selon l'une quelconque des revendications 12 à 14, **caractérisée en ce que** le canal de guidage (24) présente - observé dans un plan de manière transversale par rapport à une direction de propagation principale d'ondes sonores (S) dans le canal de guidage (24) - une section transversale d'ouverture (O) ronde circulaire, ovale ou rectangulaire, dans laquelle la section transversale d'ouverture (O) varie par exemple le long de la direction de propagation principale des ondes sonores (S), en particulier s'élargit dans la direction de propagation principale des ondes sonores (S).
